(19)

**Europäisches Patentamt**
**European Patent Office**
**Office européen des brevets**

(11) **EP 2 194 665 B1**

(12) **EUROPEAN PATENT SPECIFICATION**

(45) Date of publication and mention
of the grant of the patent:
**24.04.2013 Bulletin 2013/17**

(21) Application number: **08832924.8**

(22) Date of filing: **27.09.2008**

(51) Int Cl.:
***H04L 27/38*** (2006.01)   ***H04L 27/26*** (2006.01)

(86) International application number:
**PCT/JP2008/067571**

(87) International publication number:
**WO 2009/041671 (02.04.2009 Gazette 2009/14)**

(54) **CFO and I/Q imbalance estimation and compensation**

Schätzung und Ausgleichung von CFO- und I/Q-Ungleichgewicht

Estimation et compensation de CFO et déséquilibre I/Q

(84) Designated Contracting States:
**AT BE BG CH CY CZ DE DK EE ES FI FR GB GR
HR HU IE IS IT LI LT LU LV MC MT NL NO PL PT
RO SE SI SK TR**

(30) Priority: **27.09.2007 JP 2007252736**

(43) Date of publication of application:
**09.06.2010 Bulletin 2010/23**

(73) Proprietor: **Osaka Prefecture University Public
Corporation
Osaka 599-8531 (JP)**

(72) Inventors:
• **LIN, Hai
Sakai-shi
Osaka 599-8531 (JP)**
• **YAMASHITA, Katsumi
Sakai-shi
Osaka 599-8531 (JP)**

(74) Representative: **Haley, Stephen
Gill Jennings & Every LLP
The Broadgate Tower
20 Primrose Street
London EC2A 2ES (GB)**

(56) References cited:
WO-A1-03/101064      WO-A1-2007/049760
JP-A- 11 243 434      JP-A- 2000 316 031
JP-A- 2003 032 314    JP-A- 2007 180 618

• LIU H ET AL: "Frequency Offset and I/Q Imbalance
Compensation for Direct-Conversion Receivers",
IEEE TRANSACTIONS ON WIRELESS
COMMUNICATIONS, IEEE SERVICE CENTER,
PISCATAWAY, NJ, US, vol. 4, no. 2, 1 March 2005
(2005-03-01), pages 673-680, XP011129220, ISSN:
1536-1276, DOI: 10.1109/TWC.2004.842969
• HAI LIN ET AL: "Joint Compensation of
Frequency-Selective I/Q Imbalance and CFO in
OFDM-Based WLAN", CONSUMER
COMMUNICATIONS AND NETWORKING
CONFERENCE, 2008. CCNC 2008. 5TH IEEE, IEEE
CCP, PISCATAWAY, NJ, USA, 1 January 2008
(2008-01-01), pages 388-392, XP031211902, ISBN:
978-1-4244-1456-7

**Description**

The present invention relates to a method for estimating and compensating carrier frequency offsets (CFO) and I/Q imbalances in direct conversion receivers.

BACKGROUND ART

Recently, attention has been focused on direct conversion receivers (DCR) from the viewpoint of supplying low-cost receiver terminals to users. The DCR refers to a receiver which directly converts signals to baseband signals without the intervention of intermediate frequencies. The receiver can be reduced in size, costs, and power consumption as compared with those receivers that employ the conventional superheterodyne scheme.

However, the direct conversion of the RF-band signal to the baseband signal causes new problems such as direct current offsets and I/Q imbalances to occur. The direct current offset is caused by the self-mixing of a signal from the local oscillator (LO) and a signal leaked from the LO to the RF section. On the other hand, the I/Q imbalance arises from the distortion of the I-phase component and the Q-phase component from their respective ideal status.

The DCR requires RF band carrier signals with a phase difference of $\pi/2$ in order to decompose a received signal into the I-phase component and the Q-phase component. However, it is difficult to provide an LO having a precisely n/2 phase shift for high-frequency signals, and accordingly, resulting in a non-frequency-selective I/Q imbalance or the I-phase component and the Q-phase component being distorted from their ideal status.

Furthermore, in a wide-band communication system, differences in property of analog components, such as filters disposed in the I-branch and the Q-branch, also causes the frequency selective I/Q imbalance. The I/Q imbalance may cause image interferences and significant degradation in error rate characteristics (Non-Patent Document 1).

On the other hand, the orthogonal frequency division multiplexing (OFDM) scheme is a communication scheme that can make effective use of frequencies and enhance the resistance to multipath interferences. The OFDM scheme is employed as various wireless communication schemes such as the DAB, DVB, and IEEE 802.11a. However, the OFDM signal is a multiplexed signal with overlapped spectra, so that the presence of a carrier frequency offset (CFO) causes the so-called inter-carrier interference (ICI) or the corruption of orthogonality between carriers, resulting in significant degradation of error rate characteristics. Note that as used herein, the "carrier frequency offset (CFO)" refers to such a case where the frequency of the LO of the transceiver is not consistent with that of the LO of the receiver.

To put a low-cost direct conversion OFDM receiver into actual use, it is inevitable to remove the direct current offset caused in the RF band, and compensate for the CFO and I/Q imbalance. In general, the direct current offset can be removed by AC coupling at the preceding stage. Accordingly, what comes very critical should be the CFO compensation and the I/Q imbalance compensation.

The CFO estimation and compensation for the OFDM communication scheme have been intensively studied. These studies have introduced the compensation for the non-frequency-selective I/Q imbalance by considering only the difference in amplitude and phase in the LO, the compensation for the frequency selective I/Q imbalance by considering the difference in characteristics between the analog components such as a filter disposed in the I-branch and the Q-branch, the compensation for the CFO under the non-frequency-selective I/Q imbalance, and the like.

However, an attempt to compensate for the CFO by considering the non-frequency-selective imbalance and the frequency selective imbalance can be seen only in Non-Patent Document 2.

A brief description will now be made below to the method disclosed in Non-Patent Document 2. Note that as used herein, uppercase (lowercase) boldface letters are used to denote a matrix (column vector) in the equations. Furthermore, some sentences may contain the word "vector" in front of a letter such as in a vector X. Furthermore, the superscripts in some equations, such as the "modified H", the "italicized T", the asterisk, and the elongated cross (dagger), will be used to denote the Hermitian, transpose, conjugate, and pseudo-inverse matrices, respectively. Furthermore, the subscripts such as "italicized letters I and Q" will be used as the in-phase (I-branch) and the orthogonal (Q-branch) components, respectively. Furthermore, those letters with a symbol placed over them will also be denoted, for example, as hat A (referring to a letter A with a symbol "caret" above it).

Shown at 13 is a DCR mathematical model which takes into account the I/Q imbalance. A received signal bleb r(t) that has been received through the antenna and the amplifier is divided into two channel signals, i.e., the I-branch and Q-branch signals. Note that as used herein, the term "bleb r" represents "r" which has an upwardly opened arc mark placed above it. These signals will undertake a multiplication by the multiplier in the LO and go through a low-pass filter. After that, it is thought that the signals are converted using a switch into digital signals. It is assumed here that the digital signals of the I-branch and the Q-branch are $r_I(k)$ and $r_Q(k)$.

The non-frequency-selective I/Q imbalance caused by the LO is characterized by an amplitude difference $\alpha$ and a phase difference $\varphi$. The frequency selective I/Q imbalance is modeled using two real-coefficient low-pass filters which have frequency characteristics $G_I(f)$ and $G_Q(f)$. However, the $G_I(f)$ and $G_Q(f)$ are zero for the absolute value f > B/2, where B is the bandwidth. On the other hand, the CFO can be expressed by the equation below in terms of the received signal bleb r(t) in the RF band, which has been modulated at an intermediate frequency fc with a frequency offset Δf.

[Equation 1]

$$\check{r}(t) \;=\; 2 \cdot \mathcal{R}e\{\tilde{r}(t) \cdot e^{j2\pi(f_c+\Delta f)t}\}$$

… (1)

The bleb r(t) is on the left side of Equation (1). Here, the tilde r(t) on the right side of Equation (1) is the received signal that has been down-converted to a baseband, and can be expressed by Equation (2). Note that the "tilde r" denotes an "r" with a mark "-" placed above it.

[Equation 2]

$$\tilde{r}(t) \;=\; \tilde{r}_I(t) + j \cdot \tilde{r}_Q(t) = s(t) \otimes h(t)$$

… (2)

Note that s(t) and h(t) in Equation (2) are representations of the transmitted signal and the channel response in terms of the baseband signal. The encircled "x" placed between s(t) and h(t) is a symbol denoting the operation of convolution.

Furthermore, the tilde $r_I(t)$ and the tilde $r_Q(t)$ are baseband signals in the I-branch and the Q-branch, respectively. Furthermore, "j" is an imaginary unit.

Here, by following the derivations in Non-Patent Documents 1 and 2, the down-converted baseband signal r(t) is given the expression below.

[Equation 3]

$$r(t) \;=\; r_I(t) + j \cdot r_Q(t)$$
$$=\; \{e^{j2\pi\Delta ft} \cdot \tilde{r}(t)\} \otimes c_1(t) + \{e^{-j2\pi\Delta ft} \cdot \tilde{r}^*(t)\} \otimes c_2(t)$$

… (3)

where the $c_1(t)$ and $c_2(t)$ can be expressed by Equation (4) and Equation (5) as below.

[Equation 4]

$$c_1(t) \;=\; \frac{1}{2}\mathcal{F}^{-1}\{G_I(f) + \alpha e^{-j\phi}G_Q(f)\}$$

… (4)

[Equation 5]

$$c_2(t) \;=\; \frac{1}{2}\mathcal{F}^{-1}\{G_I(f) - \alpha e^{j\phi}G_Q(f)\}$$

… (5)

An AD converter (ADC) with a period $T_s$ that satisfies the Nyquist sampling theorem is used to make the above equation discrete. At this time, assuming that $c_1(t)$, $c_2(t)$, and h(t) have an extent $L_1T_S$, $L_2T_S$, and $L_hT_S$, respectively, a discrete-time signal is obtained as in Equation (6) below.

[Equation 6]

$$r(k) \;=\; \overleftarrow{r}(k) + \overrightarrow{r}(k)$$

… (6)

In the equation above, the symbols with the right and left arrows above the "r" on the left side are referred to as the "right arrow r(k)" and the "left arrow r(k)," respectively. The "left arrow r(k)" and the "right arrow r(k)" are expressed as in Equation (7) and Equation (8) below, respectively.
[Equation 7]

$$\overleftarrow{r}(k) = \{e^{j2\pi\Delta fkT_s}[s(k) \otimes \mathbf{h}]\} \otimes \mathbf{c}_1 = e^{j2\pi\Delta fkT_s} s(k) \otimes \overleftarrow{\mathbf{h}}$$

$$\cdots (7)$$

In the equation above, the left side is the "left arrow r(k)", and the rightmost term with a left arrow above the boldface h on the right side is referred to as the "vector left arrow h". Note that the $c_1$ has been rewritten as the vector $c_1$.
[Equation 8]

$$\overrightarrow{r}(k) = \{e^{-j2\pi\Delta fkT_s}[s^*(k) \otimes \mathbf{h}^*]\} \otimes \mathbf{c}_2 = e^{-j2\pi\Delta fkT_s} s^*(k) \otimes \overrightarrow{\mathbf{h}}$$

$$\cdots (8)$$

In the equation above, the left side is the "right arrow r(k)", and the rightmost term with a right arrow placed above the boldface h on the right side is referred to as the "vector right arrow h". Note that the $c_2$ has been rewritten as the vector $c_2$.
In the equation above, the vector h is the transpose matrix of ($h_0$, ..., $h_{Lh-1}$), the vector $c_1$ is the transpose matrix of ($c_{1,0}$, ..., $c_{1,L1-1}$), and the vector $c_2$ is the transpose matrix of ($c_{2,0}$, ..., $c_{2,L2-1}$). Note that the vector h, the vector $c_1$, and the vector $c_2$ can be explicitly represented as in the equations below.
[Equation 9]

$$\mathbf{h} = \left[ h_0, \cdots, h_{L_h-1} \right]$$

$$\cdots (9)$$

[Equation 10]

$$\mathbf{c}_1 = \left[ c_{1,0}, \cdots, c_{1,L_h-1} \right]$$

$$\cdots (10)$$

[Equation 11]

$$\mathbf{c}_2 = \left[ c_{2,0}, \cdots, c_{2,L_h-1} \right]$$

$$\cdots (11)$$

Here, the left arrow r(k) is a desired signal, while the right arrow r(k) is an image interference signal resulting from the I/Q imbalance. Note that the "vector left arrow h" and the "vector right arrow h" represent a combined channel for the left arrow r(k) and the right arrow r(k), respectively. Furthermore, the "vector left arrow r(k)" and the "vector right arrow r(k)" contain the vector $c_1$ and the vector $c_2$ which have $\alpha$ and $\varphi$ relating to the non-frequency-selective I/Q imbalance.
Furthermore, consider here an OFDM system that includes N subcarriers. Note that in the OFDM scheme, since the bandwidth B is divided into N subchannels at intervals of $f_0$ = B/N, the Nyquist sampling period is $T_s$ = 1/(N$f_0$). Furthermore, the carrier frequency offset CFO represents the normalized CFO expressed by $\varepsilon$ = $\Delta f/f_0$. Thus, hereinafter, "$\Delta fkT_s$" will be represented as "$\varepsilon k/N$" with $\Delta f$ and $T_s$ replaced accordingly.
With the preparations made as above, a brief description will be made first to a conventionally well-known method. This is to help the understanding of the present invention.

<MPP-based compensation method>

Fig. 14 shows a pilot signal (hereinafter referred to as the "MPP") which was used in Non-Patent Document 2 for the CFO and I/Q imbalance compensation. The MPP includes the same symbols with its even symbols rotated by a phase of $\pi/4$. Note that in the subsequent discussions, the compensation will be carried out in three stages: the estimation of an CFO, the compensation for the I/Q imbalance, and the compensation for the CFO.

Under the perfectly timed synchronization, hat M received pilot samples with the guard interval (GI) of a length $N_{GI}$ removed are arranged as in the equation below. Note that hat M is the same as "M" above which an angle bracket or caret symbol is placed.

[Equation 12]

$$\hat{R} = \begin{bmatrix} \hat{r}(1,1) & \hat{r}(1,2) & \cdots & \hat{r}(1,K) \\ \hat{r}(2,1) & \hat{r}(2,2) & \cdots & \hat{r}(2,K) \\ \vdots & \vdots & \ddots & \vdots \\ \hat{r}(\hat{M},1) & \hat{r}(\hat{M},2) & \cdots & \hat{r}(\hat{M},K) \end{bmatrix}$$

$$\cdots (12)$$

In the equation above, hat r(m, k) = r((m - 1) hat K + k) shows the k-th sample of the m-th received pilot symbol. Here, hat r(k) or the k-th column vector of a matrix hat R is expressed by the following equation.

[Equation 13]

$$\hat{r}(k) = E(\varepsilon) \begin{bmatrix} a(k) & b(k) \end{bmatrix}^{T}$$

$$\cdots (13)$$

In the equation above,

[Equation 14]

$$E(\varepsilon) = \begin{bmatrix} e(\varepsilon) & e^{\bullet}(\varepsilon) \end{bmatrix}$$

$$\cdots (14)$$

[Equation 15]

$$a(k) = e^{j\frac{2\pi\varepsilon k}{N}}p(k) \otimes \overleftarrow{h}$$

$$\cdots (15)$$

[Equation 16]

$$b(k) = e^{-j\frac{2\pi\varepsilon k}{N}}p^{*}(k) \otimes \overrightarrow{h}$$

$$\cdots (16)$$

[Equation 17]

$$e(\varepsilon) = [e^{j\frac{2\pi\varepsilon\hat{K}}{N}}, e^{j(2\cdot\frac{2\pi\varepsilon\hat{K}}{N}+\frac{\pi}{4})}, \ldots, e^{j(\hat{M}\cdot\frac{2\pi\varepsilon\hat{K}}{N}+\frac{\pi}{4})}]^{T}$$

$$\cdots (17)$$

Equation (13) shows a problem of estimating a plurality of line spectra, so that the estimation of CFO by NLS can be expressed by the following equation. Note that the NLS technique is found in Non-Patent Document 3.

[Equation 18]

$$\hat{\varepsilon} = \operatorname*{argmax}_{\tilde{\varepsilon}} J(\tilde{\varepsilon})$$

... (18)

In the equation above,
[Equation 19]

$$J(\tilde{\varepsilon}) = \operatorname{tr}\{\mathbf{E}(\tilde{\varepsilon})(\mathbf{E}^{\mathcal{H}}(\tilde{\varepsilon})\mathbf{E}(\tilde{\varepsilon}))^{-1}\mathbf{E}^{\mathcal{H}}(\tilde{\varepsilon})\hat{\mathbf{R}}\hat{\mathbf{R}}^{\mathcal{H}}\}$$

... (19)

On the other hand, the frequency selective imbalance can be compensated for by placing an FIR filter x of a length L in the Q-branch. Here, for ease of understanding, the compensation filter is placed in the Q-branch instead of the I-branch shown in Non-Patent Document 2. Note that the filter x is a vector, and hereinafter also denoted as the vector x.

Taking $\alpha$ as part of the $G_Q(f)$, the frequency response X(f) of the compensation filter is set to $\alpha G_Q(f) \cdot X(f) = G_I(f)$. From the fact that $g(t) = Fu^{-1}\{G_I(f)\}$, the vector g is its discrete-time representation, and g(t) is a real coefficient, the signal compensated for by the filter is expressed by the following equation. Note that $Fu^{-1}$ represents the Fourier inverse transform.

[Equation 20]

$$\dot{r}(k) = \frac{1}{2}[(1 + e^{-j\phi})\ddot{r}(k) + (1 - e^{j\phi})\ddot{r}^*(k)]$$

... (20)

Here, the left side of Equation (14) is referred to as the dot r(k), while the r having two dots above it on the right side is called the double-dot r(k). The double-dot r(k) is expressed as in Equation (21).

[Equation 21]

$$\ddot{r}(k) = \left\{ e^{j2\pi\varepsilon k/N} \cdot \tilde{r}(k) \right\} \otimes \mathbf{g}$$

... (21)

In the equation above, the double-dot r(k) is a signal affected by CFO. Here, the real part and the imaginary part of the double-dot r(k) are expressed by the following equations.
[Equation 22]

$$\ddot{r}_I(k) = \dot{r}_I(k),$$

... (22)

[Equation 23]

$$\ddot{r}_Q(k) = \tan\phi \cdot \dot{r}_I(k) + \sec\phi \cdot \dot{r}_Q(k)$$

... (23)

The aforementioned two equations show an asymmetrical compensation of the non-frequency-selective imbalance signal which is compensated by two gain coefficient elements $\beta$ and $\chi$ corresponding to $\tan\phi$ and $\sec\phi$. Note that this is described in Non-Patent Document 4.

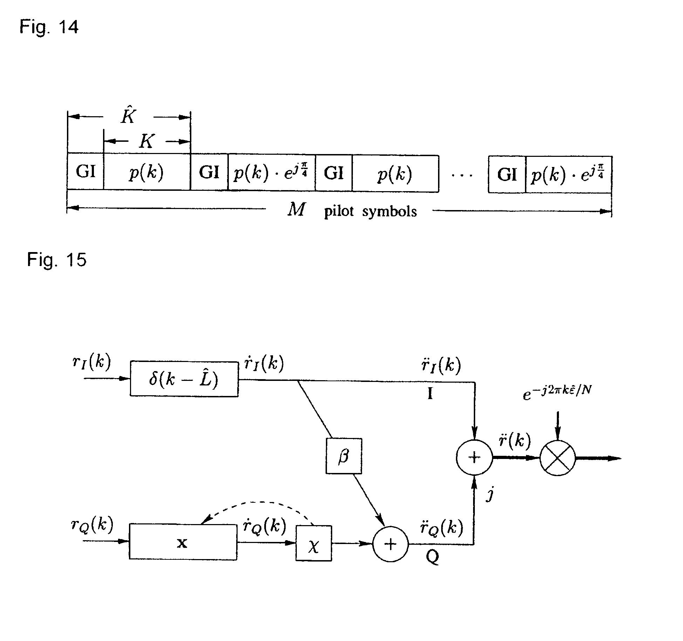

Fig. 15 shows the entire structure that takes the CFO compensation into account, where it is assumed that hat L = (L - 1)/2. The digitized signals of $r_I(k)$ and $r_Q(k)$ are compensated as follows. First, the $r_Q(k)$ is acted upon by the compensation filter x to obtain the dot $r_Q(k)$. On the other hand, the $r_I(k)$ is delayed for the duration of (k - hat L) to be a signal dot $r_I(k)$. The dot $r_I(k)$ is multiplied by $\beta$ to yield a signal, and the dot $r_Q(k)$ is acted upon by the filter $\chi$ to produce another signal, so that these signals are summed to give a double-dot $r_Q(k)$.

The complex signal double-dot r(k) with the dot $r_I(k)$ employed as the double-dot $r_I(k)$ and the double-dot $r_Q(k)$ employed as the imaginary part is a signal with the I/Q imbalance having been compensated for. The double-dot r(k) is multiplied by the amount of the CFO compensation, thereby providing a signal with the I/Q imbalance and CFO having been compensated for. On the other hand, obviously, $\chi$ is incorporated into the vector x, so that the compensation problem is now turned into the optimization problem of the vectors x and $\beta$.

In the absence of the I/Q imbalance, only the CFO is affected in the received pilot. Thus, the optimum compensation filter vector x and the gain coefficient $\beta$ become optimum when adjacent pilot symbols after the I/Q imbalance has been compensated for coincide with the phase difference caused by the CFO. When a CFO estimation value hat $\varepsilon$ is given, the following quantities are defined as in the equations below.

[Equation 24]

$$\dot{\mathbf{R}}_Q(m) = \begin{bmatrix} \hat{r}_Q(m,1) & & & \\ \hat{r}_Q(m,2) & \hat{r}_Q(m,1) & & \\ \vdots & \hat{r}_Q(m,2) & \ddots & \\ \hat{r}_Q(m,K) & \vdots & \ddots & \hat{r}_Q(m,1) \\ & \hat{r}_Q(m,K) & \vdots & \hat{r}_Q(m,2) \\ & & \ddots & \vdots \\ & & & \hat{r}_Q(m,K) \end{bmatrix}_{(K+L-1)\times L}$$

$$\dots (24)$$

[Equation 25]

$$\hat{\mathbf{r}}_I(m) = [\underbrace{0,\cdots,0}_{L}, \hat{r}_I(m,1),\cdots,\hat{r}_I(m,K),\underbrace{0,\cdots,0}_{L}]^T$$

$$\dots (25)$$

[Equation 26]

$$\omega_m = \begin{cases} \frac{2\pi\hat{\varepsilon}\hat{K}}{N} + \frac{\pi}{4} & : m = \text{odd} \\ \frac{2\pi\hat{\varepsilon}\hat{K}}{N} - \frac{\pi}{4} & : m = \text{even} \end{cases}$$

$$\dots (26)$$

In this case, the optimum values of the vectors x and $\beta$ are expressed by the following equation (Non-Patent Document 2).

[Equation 27]

$$\begin{bmatrix} \hat{\mathbf{x}} \\ \hat{\beta} \end{bmatrix} = \begin{bmatrix} \mathbf{A}(1) \\ \vdots \\ \mathbf{A}(\hat{M}-1) \end{bmatrix}^{\dagger} \begin{bmatrix} \mathbf{B}(1) \\ \vdots \\ \mathbf{B}(\hat{M}-1) \end{bmatrix} = \mathbf{A}^{\dagger}\mathbf{B}$$

$$\dots (27)$$

In the equation above,
[Equation 28]

$$\mathbf{A}(m) = \begin{bmatrix} \hat{\mathbf{R}}_Q(m)\sin\omega_m & \hat{\mathbf{r}}_I(m)\sin\omega_m \\ \hat{\mathbf{R}}_Q(m+1) - \hat{\mathbf{R}}_Q(m)\cos\omega_m & \hat{\mathbf{r}}_I(m+1) - \hat{\mathbf{r}}_I(m)\cos\omega_m \end{bmatrix} \quad \dots \ (28)$$

[Equation 29]

$$\mathbf{B}(m) = \begin{bmatrix} \hat{\mathbf{r}}_I(m)\cos\omega_m - \hat{\mathbf{r}}_I(m+1) \\ \hat{\mathbf{r}}_I(m)\sin\omega_m \end{bmatrix} \quad \dots \ (29)$$

Obviously, the vectors x and β depend on the CFO estimation value hat ε. Finally, the CFO is corrected by a simple phase rotation.

[Non-Patent Document 1] M. Valkama, M. Renfors, and V. Koivunen, "Advanced methods for I/Q imbalance compensation in communication receivers," IEEE Trans. Signal Processing, vol.49, no.10, pp.2335-2344, Oct. 2001
[Non-Patent Document 2] G. Xing, M. Shen and H. Liu, "Frequency Offset and I/Q Imbalance Compensation for Direct-Conversion Receivers," IEEE Trans. Wireless Commun, vol.4, no.2, pp. 673-680, Mar. 2005.
[Non-Patent Document 3] P. Sotica and R. Moses, "Introduction to Spectral Analysis" Englewood Cliffs, NJ: Prentice-Hall, 1997.
[Non-Patent Document 4] J. K. Cavers, and M. W. Liao, "Adaptive compensation for imbalance and offset losses in direct conversion transceivers," IEEE Trans. Veh. Technol., vol.42, no.4, pp.581-585, Nov. 1993.

DISCLOSURE OF THE INVENTION

PROBLEMS TO BE SOLVED BY THE INVENTION

Non-Patent Document 2 is based on the modified period pilot (MPP); however, this method cannot provide a compensation coefficient for I/Q imbalance without the CFO estimation. Accordingly, the CFO estimation problem is a very critical challenge.
The CFO estimation requires accurate synchronous timing as well as the solution of a nonlinear least-squares problem (NLS). The accurate synchronous timing cannot be easily implemented from technical viewpoints. Furthermore, the solution of the nonlinear least-squares problem is comparatively easy but requires a one-dimensional search, which practically causes a major impediment.
Furthermore, the MPP-based compensation method is accompanied by the following difficulties when an attempt is made to implement it.

1. The estimation of CFO by the evaluation function (Equation 19) requires the solution of a nonlinear least-squares problem, i.e., a one-dimensional search, thus practically causing a serious impediment.

2. The optimum values of the vectors x and β in (Equation 27) can be calculated only after the CFO has been estimated. Accordingly, parallel processing cannot be performed which is an effective method of calculation.
3. To estimate the CFO with accuracy, it is necessary to know whether the received pilot symbol is an even or odd one. To this end, the accurate synchronous timing is required. However, it is generally difficult to provide accurate synchronous timing due to the loss of pilot symbols in the preceding stage caused by the leakage of a direct current offset that results from automatic gain control (AGC) and AC coupling.
4. Since only even pilot symbols are rotated by a phase of n/4, it is necessary to insert a guard interval into each symbol to prevent inter-block interferences. This causes an increase in pilot interval and a decrease in the range of CFO estimation.

MEANS FOR SOLVING THE PROBLEMS

The present invention was developed in view of the aforementioned problems. It is therefore an object of the invention to provide a method for suggesting an extended period pilot (GPP) and for simultaneously estimating imbalance coefficients relating to the CFO and the IQ imbalance. To this end, the present invention provides a method for transmitting pilot signals and a method for determining the compensation coefficients of the CFO and the I/Q imbalance.

The present invention was developed to solve the aforementioned problems. The invention provides a method for sequentially acquiring a predetermined number of pieces of digitized output data of the I-branch and the Q-branch in a complex demodulator and analytically determining a CFO estimation value and a compensation coefficient of an I/Q imbalance by the operation of a matrix made up of the data.

More specifically, the invention provides a CFO estimation method for receiving a signal having a pilot signal, demodulating the signal at a demodulator having an I-branch and a Q-branch, and then estimating a CFO of the signal. The method includes the steps of: digitizing the I-branch side signal of the received pilot signal into I data; digitizing the Q-branch side signal of the received pilot signal into Q data; forming (P - K) samples from an n-th sample of the I data into a matrix of Equation (34); forming (P - K) samples from an (n + K)-th sample of the I data into a matrix of Equation (37); forming (P - K + (L - 1)/2) samples from an (n - (L - 1)/2)-th sample of the Q data into a matrix of Equation (35); forming (P - K + (L - 1)/2) samples from an (n + K - (L - 1)/2)-th sample of the Q data into a matrix of Equation (38); determining a matrix u being equal, when multiplied by a matrix of Equation (46) obtained from the Equation (34) and the Equation (37), to a matrix of Equation (45) obtained from the Equation (34), the Equation (37), the Equation (35), and the Equation (38); and determining a CFO estimation value ε based on Equation (48) from first and second elements of the matrix u.

Furthermore, the present invention provides an I/Q imbalance compensation coefficient calculation method for receiving a signal having a pilot signal, demodulating the signal at a demodulator having an I-branch and a Q-branch, and then calculating a compensation coefficient to compensate for the I/Q imbalance of the signal. The method includes the steps of: digitizing the I-branch side signal of the received pilot signal into I data; digitizing the Q-branch side signal of the received pilot signal into Q data; forming (P - K) samples from an n-th sample of the I data into a matrix of Equation (34); forming (P - K) samples from an (n + K)-th sample of the I data into a matrix of Equation (37); forming (P - K + (L - 1)/2) samples from an (n - (L - 1)/2)-th sample of the Q data into a matrix of Equation (35); forming (P - K + (L - 1)/2) samples from an (n + K - (L - 1)/2)-th sample of the Q data into a matrix of Equation (38); determining a matrix u being equal, when multiplied by a matrix of Equation (46) obtained from the Equation (34) and the Equation (37), to a matrix of Equation (45) obtained from the Equation (34), the Equation (37), the Equation (35), and the Equation (38); determining an I/Q imbalance compensation coefficient β from first and second elements of the matrix u and a CFO value ε based on Equation (49); and determining an I/Q imbalance compensation coefficient vector x from elements other than the first and second elements of the matrix u and the CFO value hat ε based on Equation (50).

Furthermore, the present invention provides an I/Q imbalance compensation method for receiving a signal having a pilot signal, demodulating the signal at a demodulator having an I-branch and a Q-branch, and thereafter compensating the signal. The method includes the steps of: digitizing the I-branch side signal of the received signal into I data; digitizing the Q-branch side signal of the received signal into Q data; multiplying the Q data by the vector x determined according to the method of claim 2; multiplying the I data by β determined according to the method of claim 2; adding data obtained by multiplying the I data by β to the Q data multiplied by the vector x to yield Qc data; and determining a complex number with the I data employed as a real part and the Qc data employed as an imaginary part.

Furthermore, the present invention provides a signal compensation method for receiving a signal having a pilot signal, demodulating the signal at a demodulator having an I-branch and a Q-branch, and thereafter compensating the signal. The method includes the step of compensating the complex number determined in claim 3, based on the CFO estimation value determined by the method according to claim 1.

Furthermore, the present invention provides a CFO estimation method for receiving a signal having a pilot signal, demodulating the signal at a demodulator having an I-branch and a Q-branch, and then estimating a CFO of the signal. The method includes the steps of: digitizing the I-branch side signal of the received pilot signal into I data; digitizing the Q-branch side signal of the received pilot signal into Q data; forming (P - K) samples from an n-th sample of the I data into a matrix of Equation (51); forming (P - K) samples from an (n + K)-th sample of the I data into a matrix of Equation (53); forming (P - K + (L - 1)/2) samples from an (n - (L - 1)/2)-th sample of the Q data into a matrix of Equation (52); forming (P - K + (L-1)/2) samples from an (n + K - (L - 1)/2)-th sample of the Q data into a matrix of Equation (54); determining a matrix u being equal, when multiplied by a matrix of Equation (61) obtained from the Equation (51) and the Equation (53), to a matrix of Equation (60) obtained from the Equation (51), the Equation (53), the Equation (52), and the Equation (54); and determining a CFO estimation value ε from first and second elements of the matrix u based on Equation (63).

Furthermore, the present invention provides an I/Q imbalance compensation coefficient calculation method for receiving a signal having a pilot signal, demodulating the signal at a demodulator having an I-branch and a Q-branch, and then calculating a compensation coefficient to compensate for the I/Q imbalance of the signal. The method includes the steps of: digitizing the I-branch side signal of the received pilot signal into I data; digitizing the Q-branch side signal of the received pilot signal into Q data; forming (P - K) samples from an n-th sample of the I data into a matrix of Equation (51); forming (P - K) samples from an (n + K)-th sample of the I data into a matrix of Equation (53); forming (P - K + (L

- 1)/2) samples from an (n - (L - 1)/2)-th sample of the Q data into a matrix of Equation (52); forming (P - K + (L - 1)/2) samples from an (n + K - (L - 1)/2)-th sample of the Q data into a matrix of Equation (54); determining a matrix u being equal, when multiplied by a matrix of Equation (61) obtained from the Equation (51) and the Equation (53), to a matrix of Equation (60) obtained from the Equation (51), the Equation (53), the Equation (52), and the Equation (54); determining an I/Q imbalance compensation coefficient $\beta$ from first and second elements of the matrix u and a CFO value $\varepsilon$ based on Equation (64); and determining an I/Q imbalance compensation coefficient vector x from elements other than the first and second elements of the matrix u and the CFO value hat $\varepsilon$ based on Equation (65).

Furthermore, the present invention provides an I/Q imbalance compensation method for receiving a signal having a pilot signal, demodulating the signal at a demodulator having an I-branch and a Q-branch, and thereafter compensating the signal. The method includes the steps of: digitizing the I-branch side signal of the received signal into I data; digitizing the Q-branch side signal of the received signal into Q data; multiplying the I data by the vector x determined by the method according to claim 6; multiplying the Q data by $\beta$ determined according to the method of claim 2; adding data obtained by multiplying the Q data by $\beta$ to the I data multiplied by the vector x to yield Ic data; and determining a complex number with the Q data employed as a real part and the Qc data employed as an imaginary part.

Furthermore, the present invention provides a signal compensation method for receiving a signal having a pilot signal, demodulating the signal at a demodulator having an I-branch and a Q-branch, and thereafter compensating the signal. The method includes the step of compensating the complex number determined in claim 7 based on the CFO estimation value determined by the method according to the claim 5.

Furthermore, the present invention provides a CFO sign determination method for receiving a signal having a pilot signal, demodulating the signal at a demodulator having an I-branch and a Q-branch, and determining a sign of a CFO of the signal. The method includes the steps of: digitizing the I-branch side signal of the received pilot signal into I data; digitizing the Q-branch side signal of the received pilot signal into Q data; creating a matrix R of Equation (72) with a first row and a second row, the first row having (P - K) pieces of complex data with (P - K) samples from an n-th sample of the I data employed as a real part and (P - K) samples from an nth sample of the Q data employed as an imaginary part, the second row having (P - K) pieces of complex data with (P - K) samples from an (n + K)-th sample of the I data employed as a real part and (P - K) samples from an (n + K)-th sample of the Q data employed as an imaginary part; creating a matrix of Equation (78) based on an absolute value of a CFO estimation value $\varepsilon$ whose sign is wanted to be determined; multiplying the Equation (72) by Equation (78); and comparing a norm of a first row of the resulting matrix with a norm of a second row to determine that the sign of $\varepsilon$ is positive when the first row norm is greater than the second row norm.

Furthermore, the present invention provides an I/Q imbalance compensation coefficient calculation method for demodulating a signal at a demodulator having an I-branch and a Q-branch, the signal containing a pilot signal with a short TS and a long TS and with no phase difference between adjacent symbols, and for calculating a compensation coefficient to compensate for an I/Q imbalance of the signal. The method includes the steps of: selecting a predetermined subcarrier from the respective short TS and long TS to create a matrix of Equation (82); creating a diagonal matrix of Equation (83) from a subcarrier element of the short TS; creating a diagonal matrix of Equation (84) from a subcarrier element of the long TS; creating a diagonal matrix of Equation (92) from a CFO value whose absolute value is less than a predetermined value; creating Equation (90) from the Equation (82), the Equation (83), and the Equation (92); creating Equation (91) from the Equation (82), the Equation (84), and the Equation (92); forming (P - K) samples from an n-th sample of the I data of the short TS into a matrix of Equation (86); forming (P - K + (L - 1)/2) samples into a matrix of Equation (85) from an (n - (L - 1)/2)-th sample of the Q data of the short TS; forming (P - K) samples from an n-th sample of the I data of the long TS into a matrix of Equation (88); forming (P - K + (L - 1)/2) samples from an (n - (L - 1)/2)-th sample of the Q data of the long TS into a matrix of Equation (87); creating Equation (94) from the Equation (85), the Equation (86), the Equation (87), the Equation (88), the Equation (90), and the Equation (91); obtaining Equation (95) from the Equation (86), the Equation (88), the Equation (90), and the Equation (91); and determining a vector being equal, when multiplied by Equation (94), to Equation (95).

EFFECTS OF THE INVENTION

A feature of the present invention lies in solving a linear least squares (LLS) algorithm, so that CFOs and the imbalance coefficients can be all analytically obtained, thereby significantly reducing calculation load. This means that compensation load is reduced for the communication device and the reception status can be frequently corrected. It therefore can be said that this is a preferable compensation method for mobile communications whose reception conditions vary. Furthermore, the conventional periodic pilot (PP) is contained in the GPP, allowing countermeasures to be taken against the ambiguity of CFO sign determinations and the problem of compensating for zero CFO. This allows the present invention to be applied, for example, even to such a case in which no phase difference is set at an IEEE 802.11a WLAN pilot signal.

BRIEF DESCRIPTION OF THE DRAWINGS

Fig. 1 is a view illustrating the configuration of a pilot signal of the present invention;
Fig. 2 is a view illustrating an exemplary layout of a device for performing a compensation method of the present invention;
Fig. 3 is a view illustrating an example of producing a signal in a compensation method of the present invention;
Fig. 4 is a view illustrating another exemplary configuration of a device for performing a compensation method of the present invention;
Fig. 5 is a view illustrating another example of producing another signal in a compensation method of the present invention;
Fig. 6 is a view illustrating still another example of producing another signal in a compensation method of the present invention;

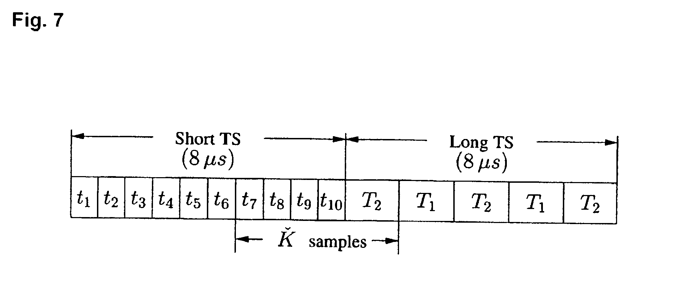

Fig. 7 is a view illustrating the structure of data in the IEEE 802.11a WLAN;
Fig. 8 is a view illustrating the flow of a compensation method according to a second embodiment of the present invention;
Fig. 9 is a view illustrating the results of simulation of the relationship between CFO and SNR;
Fig. 10 is a view illustrating the results of simulation of the relationship between BER and SNR;
Fig. 11 is a view illustrating the results of simulation of the relationship between BER and timing;
Fig. 12 is a view illustrating the results of simulation of the relationship between BLER and SNR;
Fig. 13 is a view illustrating a model of a receiver employing the direct conversion scheme at the time of occurrence of the I/Q imbalance;
Fig. 14 is a view illustrating the configuration of a conventional pilot signal; and
Fig. 15 is a view illustrating the configuration of a circuit for compensating for the I/Q imbalance and CFO.

BEST MODE FOR CARRYING OUT THE INVENTION

<GPP-based Compensation Method>

First, the rationale of the invention will be described using a number of mathematical equations. Then, the description will be followed by the explanation of specific embodiments.

Those cases 1) and 2) result from the ability of calculating the optimum value of the imbalance compensation coefficient only after the estimation of CFO, while the cases 3) and 4) arise from a special structure of the MPP.

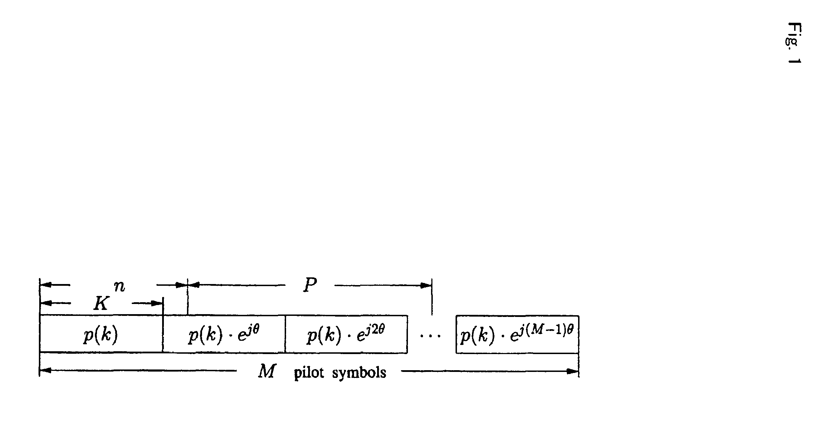

To solve all the aforementioned problems, the present invention is **characterized in that** the GPP shown in Fig. 1 is employed as a pilot symbol. The GPP is made up of a group of the same symbols that contains no guard intervals, with a common phase rotation $\theta$ between two adjacent symbols. Obviously, if no CFO and I/Q imbalance exist after the convolution with the channel, any two received samples spaced apart from each other by $KT_s$ within the pilot interval have the relation given below.

[Equation 30]

$$r(n + K) = e^{j\theta}r(n) \qquad \dots (30)$$

On the other hand, if the CFO exists but no I/Q imbalance does, then the equation below holds.

[Equation 31]

$$r(n + K) = e^{j(\psi+\theta)}r(n) \qquad \dots (31)$$

In the equation above, $\psi = 2\pi\varepsilon K/N$ is the function of an unknown CFO or $\varepsilon$.

In the (P + 2) hat L received samples within the pilot interval, the I/Q imbalance is compensated for according to Fig. 15, and P samples are accommodated in the two hat Pxl vectors shown below.

[Equation 32]

$$\ddot{\mathbf{r}}_1 \;=\; [\ddot{r}(n+\hat{L}), \cdots, \ddot{r}(n+\hat{L}+P-K-1)]^T$$

$$\dots \;(32)$$

[Equation 33]

$$\ddot{\mathbf{r}}_2 \;=\; [\ddot{r}(n+K+\hat{L}), \cdots, \ddot{r}(n+\hat{L}+P-1)]^T$$

$$\dots \;(33)$$

In the equations above, hat P = P - K. Here, a vector $r_{1,I}$ and a vector $R_{1,Q}$ can be defined as in the equations below.
[Equation 34]

$$\mathbf{r}_{1,I} = [r_I(n), \cdots, r_I(n+P-K-1)]^T$$

$$\dots \;(34)$$

and
[Equation 35]

$$\mathbf{R}_{1,Q} = \begin{bmatrix} r_Q(n+\hat{L}) & \cdots & r_Q(n) & \cdots & r_Q(n-\hat{L}) \\ r_Q(n+1+\hat{L}) & \cdots & r_Q(n+1) & \cdots & r_Q(n+1-\hat{L}) \\ \vdots & \vdots & \vdots & \vdots & \vdots \\ r_Q(n+P-K-1+\hat{L}) & \cdots & r_Q(n+P-K-1) & \cdots & r_Q(n+P-K-1-\hat{L}) \end{bmatrix}$$

$$\dots \;(35)$$

Thus, from Fig. 1, the relational equation is obtained as shown below.
[Equation 36]

$$\ddot{\mathbf{r}}_1 = \mathbf{r}_{1,I} + j \cdot (\mathbf{R}_{1,Q}\mathbf{x} + \beta \mathbf{r}_{1,I})$$

$$\dots \;(36)$$

On the other hand, n can be replaced by (n + K), thereby obtaining the following equations.
[Equation 37]

$$\mathbf{r}_{2,I} = \left[ r_I(n+K), \quad \cdots \quad r_I(n+P-1) \right]^T$$

$$\dots \;(37)$$

[Equation 38]

$$\mathbf{R}_{2,Q} = \begin{bmatrix} r_Q(n+K+\hat{L}) & \cdots & r_Q(n+K), & \cdots & r_Q(n+K-\hat{L}) \\ r_Q(n+K+1+\hat{L}) & \cdots & r_Q(n+K+1), & \cdots & r_Q(n+K+1-\hat{L}) \\ \vdots & & \vdots & & \vdots \\ r_Q(n+P-1+\hat{L}) & \cdots & r_Q(n+P-1), & \cdots & r_Q(n+P-1-\hat{L}) \end{bmatrix}$$

$$\dots \;(38)$$

These equations give the relation below.
[Equation 39]

$$\ddot{\mathbf{r}}_2 = \mathbf{r}_{2,I} + j \cdot \left( \mathbf{R}_{2,Q}\mathbf{x} + \beta\mathbf{r}_{2,I} \right)$$

$$\ldots (39)$$

Obviously, if the imbalance compensation has been accurately made, then the aforementioned two vectors satisfy the relational expression of Equation (31), and thus the relation of Equation (40) can be said to hold.
[Equation 40]

$$\ddot{\mathbf{r}}_2 = e^{j(\psi+\theta)}\ddot{\mathbf{r}}_1$$

$$\ldots (40)$$

Substituting Equation (36) and Equation (37) into Equation (40) gives the following equation.
[Equation 41]

$$\begin{bmatrix} \mathbf{r}_{1,I} & -\mathbf{R}_{1,Q} \end{bmatrix} \begin{bmatrix} \cos(\psi+\theta) - \beta\sin(\psi+\theta) \\ \mathbf{x}\sin(\psi+\theta) \end{bmatrix} = \mathbf{r}_{2,I}$$

$$\ldots (41)$$

From the above equation, it can be seen that $\cos(\psi + \theta) - \beta\sin(\psi + \theta)$ and vector $x \sin(\psi + \theta)$, that is, the CFO and the imbalance coefficient are simultaneously obtained from the vectors $r_{1,I}$, and the -vectors $R_{1,Q}$ and $r_{2,I}$.
To find three unknown parameters $\psi$, $\beta$, and the vector x, it is insufficient to determine only $\cos(\psi + \theta) - \beta\sin(\psi + \theta)$ and vector $x \sin(\psi + \theta)$. However, fortunately, Equation (40) holds.
[Equation 42]

$$\ddot{\mathbf{r}}_1 = e^{-j(\varphi+\theta)}\ddot{\mathbf{r}}_2$$

$$\ldots (42)$$

Accordingly, the relation of Equation (43) that gives $\cos(\psi + \theta) + \beta\sin(\psi + \theta)$ can be found.
[Equation 43]

$$\begin{bmatrix} \mathbf{r}_{2,I} & \mathbf{R}_{2,Q} \end{bmatrix} \begin{bmatrix} \cos(\psi+\theta) + \beta\sin(\psi+\theta) \\ \mathbf{x}\sin(\psi+\theta) \end{bmatrix} = \mathbf{r}_{1,I}$$

$$\ldots (43)$$

Thus, Equation (41) and Equation (43) can be combined into Equation (44).
[Equation 44]

$$\Lambda \begin{bmatrix} \cos(\psi+\theta) - \beta\sin(\psi+\theta) \\ \cos(\psi+\theta) + \beta\sin(\psi+\theta) \\ \mathbf{x}\sin(\psi+\theta) \end{bmatrix} = \mathbf{r}_I$$

$$\ldots (44)$$

Here, the vector A and the vector $r_I$ can be expressed as in Equation (45) and Equation (46).
[Equation 45]

$$\Lambda \;=\; \begin{bmatrix} \mathbf{r}_{1,I} & \mathbf{0} & -\mathbf{R}_{1,Q} \\ \mathbf{0} & \mathbf{r}_{2,I} & \mathbf{R}_{2,Q} \end{bmatrix}$$

$$\dots (45)$$

Here, the vector 0 is a zero vector that has the number of elements of hat P×1.
[Equation 46]

$$\mathbf{r}_I \;=\; \begin{bmatrix} \mathbf{r}_{2,I} \\ \mathbf{r}_{1,I} \end{bmatrix}$$

$$\dots (46)$$

In the above equation, if P ≥ (K + hat L + 2), the vector A is a nonsingular column matrix.
In this context, the LLS algorithm can be used to find a vector u of (L + 2)×1 dimensions in Equation (47). The first and second elements of the vector u contain only ε and β which are an CFO, while the third element onward include only the vector x.
[Equation 47]

$$\mathbf{u} = \Lambda^{\dagger} \mathbf{r}_I$$

$$\dots (47)$$

That is, the CFO estimation and the I/Q imbalance compensation coefficient can be analytically determined using the elements of the matrix u. Note that Equation (47) was expressed so as to find the pseudo-inverse matrix of the matrix A in order to determine the matrix u. However, the method for determining the matrix u from Equation (47) is not limited only to this one, and any other well-known method may also be employed. More specifically, the Gauss-Jordan solution method may also be used. Furthermore, as used herein, it will be referred to simply as "determining the vector u" or "the step of determining the vector u" from Equation (47).
Now, the CFO estimation and the I/Q imbalance compensation coefficient are explicitly shown below.
[Equation 48]

$$\hat{\varepsilon} = \frac{N}{2\pi K}\left[\arccos\left\{\frac{u(1) + u(2)}{2}\right\} - \theta\right]$$

$$\dots (48)$$

[Equation 49]

$$\hat{\beta} \;=\; \frac{u(2) - u(1)}{2\sin(2\pi\hat{\varepsilon}K/N + \theta)}$$

$$\dots (49)$$

[Equation 50]

$$\hat{\mathbf{x}} \;=\; \frac{1}{\sin(2\pi\hat{\varepsilon}K/N + \theta)}[u(3), \cdots, u(L + 2)]^{T}$$

$$\dots (50)$$

As described above, in the present invention, the CFO estimation value and the compensation value for compensating for the I/Q imbalance are analytically determined from the received pilot signal by compensating for the signal of the Q-branch. However, the I-branch and the Q-branch are fundamentally the same signal only with different phases.

Accordingly, the I-branch side signal can be compensated, thereby determining the CFO estimation value and the I/Q imbalance compensation value in the same manner.

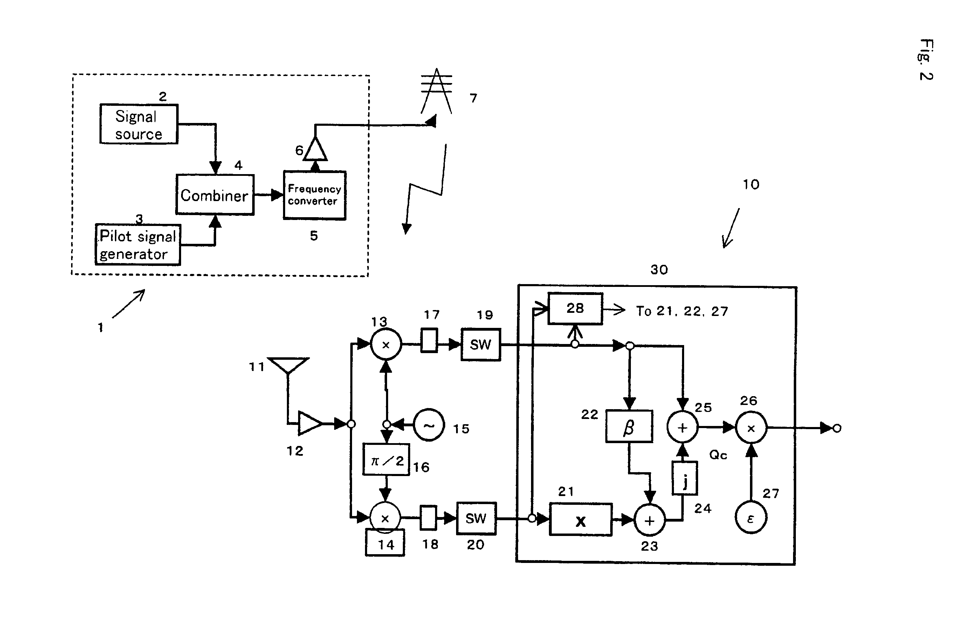

Fig. 2 shows a conceptual view for the I-branch side signal being compensated. The theory of compensation can be explained as below. It is the same as mentioned above up to the fact that the relation of Equation (31) holds for any two received samples spaced apart from each other by KTS within the pilot interval. At this point, the I side signal and the Q side signal are exchanged when the P + 2 hat L received samples within the pilot interval are placed in the two hat P×1 vectors. That is, the $r_{1,I}$ and $R_{1,Q}$ which have been found in Equation (34) onward are replaced with the $r_{1,Q}$ and $R_{1,I}$.

[Equation 51]

$$\mathbf{r}_{1,Q} = [r_Q(n), \cdots, r_Q(n + P - K - 1)]^T, \qquad \cdots (51)$$

[Equation 52]

$$\mathbf{R}_{1,I} = \begin{bmatrix} r_I(n + \hat{L}) & \cdots & r_I(n) & \cdots & r_I(n - \hat{L}) \\ r_I(n + 1 + \hat{L}) & \cdots & r_I(n + 1) & \cdots & r_I(n + 1 - \hat{L}) \\ \vdots & \vdots & \vdots & \vdots & \vdots \\ r_I(n + P - K - 1 + \hat{L}) & \cdots & r_I(n + P - K - 1) & \cdots & r_I(n + P - K - 1 - \hat{L}) \end{bmatrix} \qquad \cdots (52)$$

Furthermore, by putting n = n + K, Equation (53) and Equation (54) can be obtained as below.

[Equation 53]

$$\mathbf{r}_{2,Q} = \begin{bmatrix} r_Q(n + K), & \cdots & r_Q(n + P - 1) \end{bmatrix}^T \qquad \cdots (53)$$

[Equation 54]

$$\mathbf{R}_{2,I} = \begin{bmatrix} r_I(n + K + \hat{L}) & \cdots & r_I(n + K), & \cdots & r_I(n + K - \hat{L}) \\ r_I(n + K + 1 + \hat{L}) & \cdots & r_I(n + K + 1), & \cdots & r_I(n + K + 1 - \hat{L}) \\ \vdots & & \vdots & & \vdots \\ r_I(n + P - 1 + \hat{L}) & \cdots & r_I(n + P - 1), & \cdots & r_I(n + P - 1 - \hat{L}) \end{bmatrix} \qquad \cdots (54)$$

Thus, the modified I-branch and Q-branch signals or the vector double-dot r1 and the vector double-dot r2 are expressed as in Equation (55) and Equation (56) below.

[Equation 55]

$$\ddot{\mathbf{r}}_1 = (\mathbf{R}_{1,I}\mathbf{x} + \beta\mathbf{r}_{1,Q}) + j \cdot \mathbf{r}_{1,Q}. \qquad \cdots (55)$$

[Equation 56]

$$\ddot{\mathbf{r}}_2 = (\mathbf{R}_{2,I}\mathbf{x} + \beta\mathbf{r}_{2,Q}) + j \cdot \mathbf{r}_{2,Q}. \qquad \cdots (56)$$

If the imbalance compensation has been correctly made, Equation (30) holds true irrespective of the I-branch and the Q-branch. Thus, the aforementioned two equations, i.e., Equation (55) and Equation (56) are substituted into Equation (30). As a result, Equation (57) is obtained as below.

[Equation 57]

$$\begin{bmatrix} \mathbf{r}_{1,Q} & \mathbf{R}_{1,I} \end{bmatrix} \begin{bmatrix} \cos(\psi + \theta) + \beta \sin(\psi + \theta) \\ \mathbf{x}\sin(\psi + \theta) \end{bmatrix} = \mathbf{r}_{2,Q}. \qquad \ldots (57)$$

Furthermore, since the vector double-dot r1 and the vector double-dot r2 have the relation of Equation (40), Equation (58) can also be obtained as below.
[Equation 58]

$$\begin{bmatrix} \mathbf{r}_{2,Q} & -\mathbf{R}_{2,I} \end{bmatrix} \begin{bmatrix} \cos(\psi + \theta) - \beta \sin(\psi + \theta) \\ \mathbf{x}\sin(\psi + \theta) \end{bmatrix} = \mathbf{r}_{1,Q}, \qquad \ldots (58)$$

These equations can be combined into Equation (59) in the same manner as with Equation (44).
[Equation 59]

$$\mathbf{\Lambda} \begin{bmatrix} \cos(\psi + \theta) + \beta \sin(\psi + \theta) \\ \cos(\psi + \theta) - \beta \sin(\psi + \theta) \\ \mathbf{x}\sin(\psi + \theta) \end{bmatrix} = \mathbf{r}_Q \qquad \ldots (59)$$

Note that here, the matrix A and the matrix $\mathbf{r}_Q$ can be expressed by Equation (60) and Equation (61) below.
[Equation 60]

$$\mathbf{\Lambda} = \begin{bmatrix} \mathbf{r}_{1,Q} & \mathbf{0} & \mathbf{R}_{1,I} \\ \mathbf{0} & \mathbf{r}_{2,Q} & -\mathbf{R}_{2,I} \end{bmatrix}, \qquad \ldots (60)$$

[Equation 61]

$$\mathbf{r}_Q = \begin{bmatrix} \mathbf{r}_{2,Q} \\ \mathbf{r}_{1,Q} \end{bmatrix}, \qquad \ldots (61)$$

The matrix u is expressed using a pseudo-inverse matrix as with Equation (62) below, and the vector u is determined using a well-known solution.
[Equation 62]

$$\mathbf{u} = \mathbf{\Lambda}^{\dagger}\mathbf{r}_Q, \qquad \ldots (62)$$

Accordingly, the CFO estimation value and the I/Q imbalance compensation coefficient can be explicitly expressed by Equation (63), Equation (64), and Equation (65) as below.
[Equation 63]

$$\hat{\varepsilon} = \frac{N}{2\pi K}\{\arccos(\frac{u(1)+u(2)}{2}) - \theta\}. \qquad \ldots (63)$$

[Equation 64]

$$\hat{\beta} = \frac{u(2)-u(1)}{2\sin(2\pi\hat{\varepsilon}K/N + \theta)}, \qquad \ldots (64)$$

[Equation 65]

$$\hat{\mathbf{x}} = \frac{1}{\sin(2\pi\hat{\varepsilon}K/N + \theta)}[u(3), \cdots, u(L+2)]^{T}. \qquad \ldots (65)$$

As can be seen from the discussions above, the information required to simultaneously compensate for the CFO and I/Q imbalance is also obtained by calculating the vector A and the vector $r_l$ from the received pilot. In practice, the calculation of a trigonometric function can be performed by referencing a look-up table. Table 1 shows the calculation load for the GPP-based scheme and the MPP-based scheme. Note that no consideration was given to the amount of calculation for the CFO estimation by the MPP-based scheme. Since the relation holds that rank (vector E(-N/(8 hat K))) = 1 for hat M = 2, thus it holds that min(hat M) = 3. Since it is satisfied that min(hat P) = (L + 3)/2 and generally L < K, the present invention requires only a significantly reduced amount of calculation. Without loss of generality, when θ = π/2, the CFO estimation range allows ε, which is a half of that without taking the I/Q imbalance into account, to lie within the range of (-N/4K, N/4K). Furthermore, since Equation (40) holds true for n ≥ K, it can be seen that the present invention is robust against timing error. This is because that the present invention makes it possible to determine the compensation value of the CFO and the I/Q imbalance only if a phase difference θ is available between packets even when the earlier packet cannot be acquired.

[Table 1]

|  | GPP-based | MPP-based |
|---|---|---|
| Pseudoinverse of | $2\hat{P} \times (L + 2)$ | $(2\hat{M}(K + L - 1)) \times (L + 1)$ |
| Addition | 1 | - |
| Substraction | 1 | $3\hat{M}(K + L - 1)$ |
| Multiplication | $L + 3$ | $6\hat{M}(K + L - 1)$ |

Now, a detailed description will be made to the practical aspects of the present invention. Fig. 2 shows the configuration of the present invention. There is a transmitter 1 which transmits signals and may be either a broadcast station or a privately-owned transmitter. In the present invention, the transmitter 1 includes a signal source 2, a pilot signal generator 3, a combiner 4, and a frequency converter 5. The transmitter 1 may also include an output amplifier 6 and an antenna 7. Here, the transmitter 1 transmits pilot signals which have phases different from each other by θ for each symbol. Furthermore, the pilot signal is time division multiplexed with the original signal emitted from the signal source. This is because the present invention requires a period of time in which only the pilot signals are being received on the reception side.

The output from the combiner 4 is transmitted via the frequency converter 5. The frequency converter 5 may include a symbolizing function, so that the format of the signal transmitted is not limited to a particular one. For example, either the OFDM scheme or the FM modulation scheme may be employed. The transmitter of the present invention imparts a predetermined phase difference to each pilot signal. This may be done by either the pilot signal generator 3 or the combiner 4. The interval at which the phase difference is imparted may be fixed or made variable. It is preferable for the receiver side to know the interval of the same phase difference. Furthermore, it is typically preferable to change the phase difference for each symbol; however, the invention is not limited thereto.

On the other hand, there is also provided a receiver 10 which includes an antenna 11, an amplifier 12, a frequency converter and a filter (17 and 18), switching elements (19 and 20), and a controller 30. The frequency converter is a complex frequency converter. The receiver 10 typically includes a local oscillator LO (15), multipliers (13 and 14), and a phase converter 16.

The output of the amplifier 12 is split into the I-branch and the Q-branch. The I-branch side signal is multiplied by a carrier signal from the local oscillator LO 15 at the multiplier 13. Furthermore, the Q-branch side signal is multiplied by a signal with the phase shifted by n/2 from that of the carrier signal of the local oscillator LO at the multiplier 14.

The signals in the I-branch and the Q-branch pass through the low-pass filters (17 and 18), respectively, to be removed of unwanted high-frequency components. Thereafter, the signals are converted into a digital signal at AD converters (19 and 20) that have a sufficient sampling frequency. The respective signals of the I-branch and the Q-branch are supplied to the controller 30.

Now, a description will be made to the processing of the controller 30 to compensate the Q-branch side signal. Fig. 1 shows a processing section associated with a processing step in the controller 30 as if the section actually exists; however, the processing is fundamentally performed by software. As a matter of course, a dedicated hardware section may also be manufactured to perform the processing. Note that the signal digitized on the I-branch side is hereinafter referred to as the I data and the signal digitized on the Q-branch side referred to as the Q data. When having received the Q data and the I data, the controller 30 allows a compensation value calculation section 28 to calculate compensation values from the respective pieces of data. The resulting compensation values are supplied to the filter section 21, a multiplier section 22, and a CFO compensation signal generation section 27, respectively.

The Q data supplied to the controller 30 is acted upon by the filter x based on the compensation value. On the other hand, the I data is multiplied by $\beta$ and then added at an adder section 23 to the Q data which has been acted upon by the filter x. The resulting signal is imparted an imaginary unit "j" at an imaginary section 24 and then added to the I data at an adder section 25. The signal to which the imaginary unit was imparted is referred to as a Qc signal. The adder section 25 outputs complex numbers. The complex number is data with the I/Q imbalance having been compensated for. Next, the complex number is multiplied at a multiplier 26 by a value, as a complex number, for compensating for $\varepsilon$ or the CFO estimation value. The complex number thus determined is a transmitted signal with both the CFO and the I/Q imbalance having been compensated for.

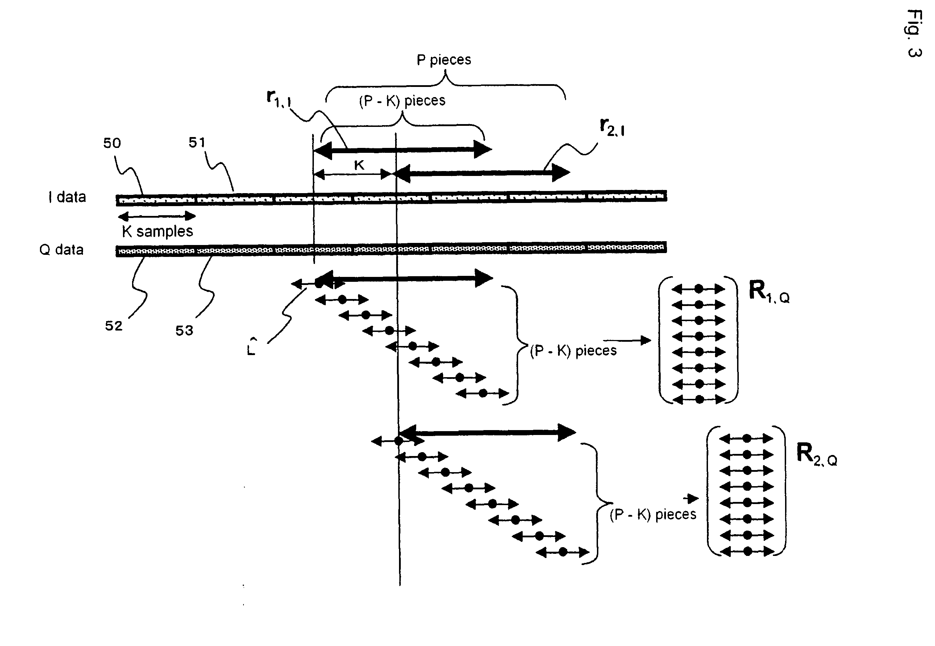

Now, the processing at the compensation value calculation section will be described in more detail. Fig. 3 shows the arrangement of received pilot signals in the digitized I data and Q data. The pilot signal has a plurality of symbols 50. Assume that one symbol has K samples. The adjacent symbols (50 and 51) have a phase shift of $\theta$. Likewise, the symbols 52 and 53 have a phase shift of $\theta$. The compensation value calculation section 28 starts acquiring data at any position of the pilot signal. Here, the data refers to individual samples.

The timing at which data starts to be acquired is not limited to a particular one. This is because the present invention makes it possible to calculate compensation values if a predetermined number of pieces of data can be acquired from pilot signals having a phase shift of $\theta$.

The process acquires P pieces of data from both the I data and the Q data. The invention is not limited to a particular value of P so long as it is greater than (K + hat L + 2). Here, hat L is (L - 1)/2 and L is the number of stages of the filter 21. For example, for a pilot signal with one symbol made up of 16 samples (K = 16), it may be acceptable that hat L is roughly equal to 2. That is, so long as P is 20 or greater in the number of pieces of data, compensation values can be calculated with sufficient accuracy. Note that L does not have to be always an odd number, and if it is an even number, then the least digit may be incremented or decremented by one.

Next, (P - K) pieces of data are taken from the first portion of the acquired I data as a vector $r_{1,I}$, and the (P - K) pieces of data from the (K + 1)-th to the end of the I-data are taken as a vector $r_{2,I}$.

On the other hand, (P - K) pieces of data is extracted from the first portion of the acquired Q data. Here, hat L pieces of data are added to the respective acquired pieces of data in front and at the end thereof. For example, hat L can be assumed to be two. Furthermore, assume that the acquired data from the Q-branch is arranged as v1, v2, v3, v4, v5, v6, v7, .... Here, focusing on data v3, assume that (v1, v3, v3, v4, v5) is a v3-based data set. In the same manner, if the data v4 is focused, then it is (v2, v3, v4, v5, v6, v7).

Fig. 3 shows hat L as an arrow. Note that hat L is (L - 1)/2, and L is the number of stages of the filter. The number of stages of the filter x may be 3 to 4, which will allow calculations to be performed with sufficient accuracy.

In this manner, a (2 hat +1)×(P - K) matrix is obtained from the (P - K) pieces of data. Assume that this matrix is a matrix $R_{1,Q}$. On the other hand, (P - K) pieces of data from the (K + 1)-th of the acquired data will be used to create a matrix $R_{2,Q}$ in the same manner.

Then, the vector $r_{1,I}$, the vector $r_{2,I}$, the matrix $R_{1,Q}$, and the matrix $R_{2,Q}$ are used to form the matrix A as in Equation (44). Furthermore, the vector $r_I$ is created from the vector $r_{1,I}$ and the vector $r_{2,I}$ as in Equation (46). Then, the vector u of (L + 2)×1 dimensions is found, for example, as in Equation (47). As already discussed above, the solution method herein may be used to find the pseudo-inverse matrix of the matrix A, and a well-known solution may also be used. Note that the Q data here is mathematically an imaginary number, and to find the vector u, complex number calculations have to be performed for calculations for each element of the vector $r_{1,I}$, the vector $r_{2,I}$, the matrix $R_{1,Q}$, and the matrix $R_{2,Q}$.

Using the resulting elements of the vector u, the CFO estimation value or hat $\varepsilon$, the I/Q imbalance compensation value or hat β, and the vector hat x are determined in accordance with Equation (48), Equation (49), and Equation (50). Note that θ is the phase difference between pilot signal symbols and thus a known value.

In the manner mentioned above, the compensation value calculation section determines the CFO estimation value and the I/Q imbalance compensation value.

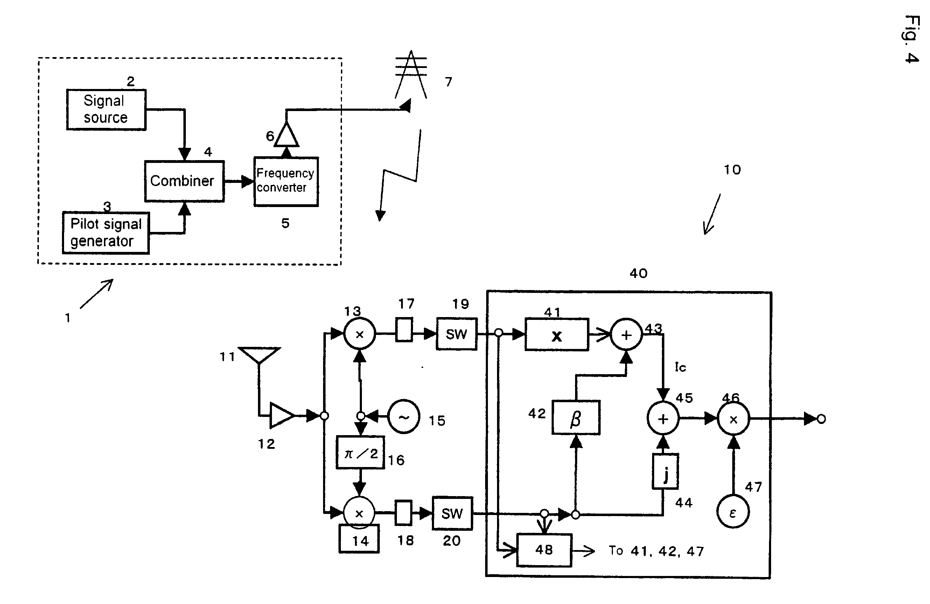

Fig. 4 shows the arrangement for compensating the I-branch side signal. The transmitter 1 and the receiver 10 are fundamentally the same. However, the receiver 10 has a controller 40. The components other than the controller 40 are the same as those for compensating the Q data, and thus will not be explained repeatedly.

The I data supplied to the controller will be subjected to the filter x41 based on the compensation value. On the other hand, the Q data is multiplied by β at a multiplier section 42 and then added at an adder section 43 to the I data that has been acted upon by the filter x41. The resulting data is referred to as Ic data. The resulting signal is added at an adder section 45 as a real number to the Q data that has been imparted the imaginary unit "j" at an imaginary section 44. The output of the adder 45 is a complex number with the I/Q imbalance compensated for. This complex number is multiplied by a complex number to compensate for the CFO estimation value or ε.

The real part of the resulting complex number is a signal with the CFO and the I/Q imbalance having been compensated for.

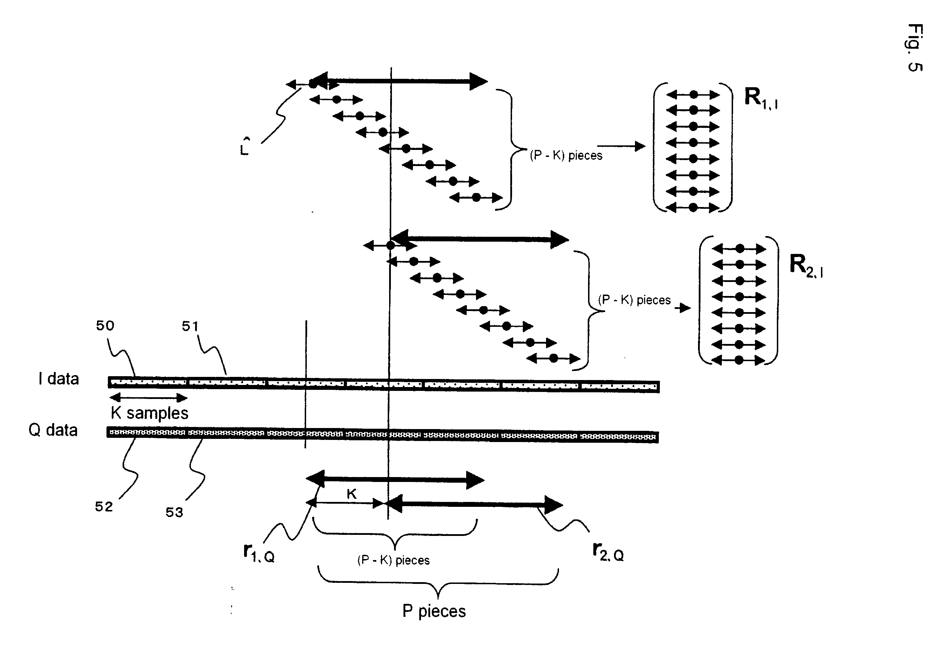

Now, the processing performed by the compensation value calculation section will be explained in more detail. As in Fig. 3, Fig. 5 shows the arrangement of the received pilot signal of the digitized I data and Q data. To compensate the I data, the matrix $R_{1,I}$ and the matrix $R_{2,I}$ are produced from the I data, while the vector $r_{1,Q}$ and the vector $r_{2,Q}$ are prepared from the Q data. These four matrices and vectors are produced exactly in the same manner as in Fig. 2.

Next, using the vector $r_{1,Q}$, the vector $r_{2,Q}$, the matrix $R_{1,I}$, and the matrix $R_{2,I}$, the matrix Λ is formed as in Equation (60). Furthermore, the vector $r_{1,Q}$ and the vector $r_{2,Q}$ are used to form a vector $r_Q$ as in Equation (61). Then, the vector u of $(L + 2) \times 1$ dimensions is determined, for example, as in Equation (62). As already discussed above, the solution method herein may be used to find the pseudo-inverse matrix of the matrix A, and a well-known solution may also be used. Note that the Q-branch signal here is mathematically an imaginary number, and to find the vector u, complex number calculations have to be performed for calculations for each element of the vector $r_{1,Q}$, the vector $r_{2,Q}$, the matrix $R_{1,I}$, and the matrix $R_{2,I}$.

Using the resulting elements of the vector u, the CFO estimation value or hat ε, the I/Q imbalance compensation value or hat β, and the vector hat x are determined based on Equation (63), Equation (64), and Equation (65). Note that θ is the phase difference between pilot signal symbols and thus a known value.

In the manner mentioned above, the compensation value calculation section determines the CFO estimation value and the I/Q imbalance compensation value.

Note that the discussions above have been made to consecutive pilot signals; however, a predetermined length of data may also be contained between pilot signals.

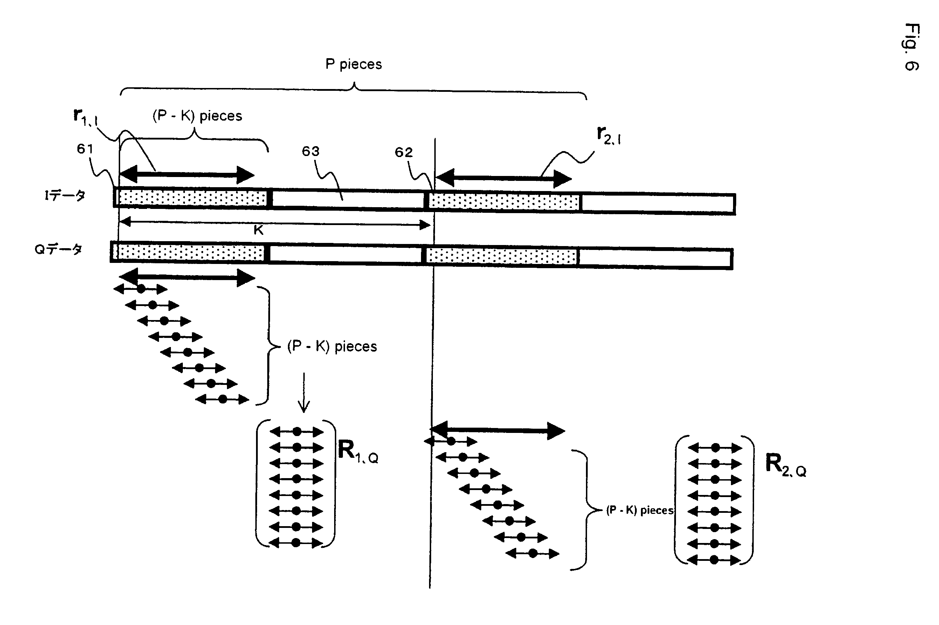

Fig. 6 shows the structure of the received data in such a case. That is, there exists data 63 indicative of communication contents between one-symbol pilot signal 61 and pilot signal 62. However, it is assumed that the relationship between the pilot signal and the data indicative of the communication contents is known. This case is not like the one that has been discussed so far, i.e., the case of consecutive pilot signals; however, the compensation method of the present invention discussed above can be applied even to such a case.

More specifically, a setting is made as P between the start of the pilot signal 61 to the end of the pilot 62. Then, another setting K is made between the beginning of the pilot signal 61 and the beginning of the pilot signal 62. That is, P to be set is larger. This makes it possible to obtain the first (P - K) pieces of data from the pilot signal 61. Furthermore, as for the train of the next (P - K) pieces of data, it can be obtained from the pilot signal 62 by taking the (P - K) pieces of data from the (K + 1)-th to the P-th data. Hereinafter, it is possible to make a compensation in the same manner as discussed above.

Note that the present invention allows for determining the CFO and the I/Q imbalance compensation coefficient; however, only the CFO may be determined by another method, so that the resulting CFO value may be used to find the I/Q imbalance compensation coefficient. This is because the I/Q imbalance compensation coefficient can be determined based on Equation (49) and Equation (50) using the CFO estimation value.

(Second embodiment)

<Compensation Method for Existing Standards>

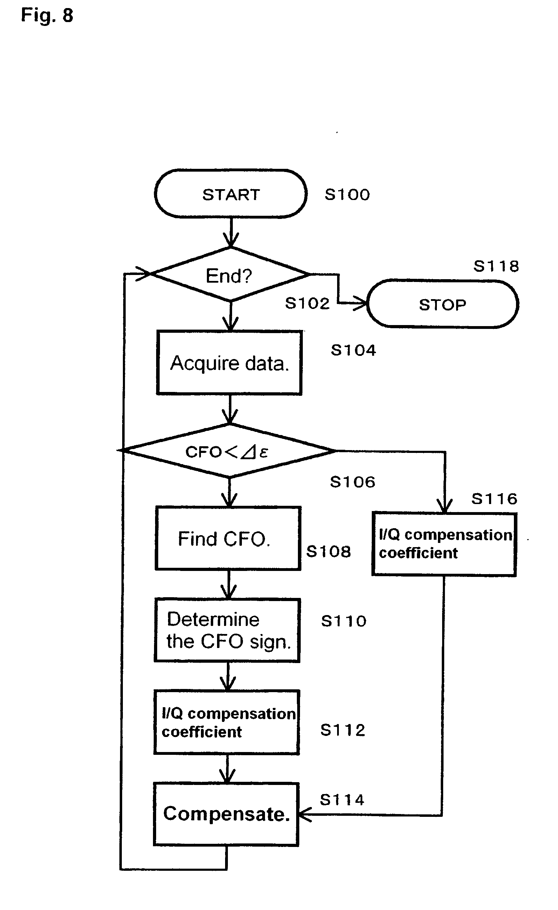

For Wireless standard pilots, periodic pilots (PP) may be generally used, thereby allowing the GPP-based compensation method provided by the present invention to be applicable thereto. In this context, an example is shown here. Fig. 8 shows a preamble in accordance with the IEEE 802.11a WLAN standards, which is made up of two types of training series (TS). In the figure, the short TS includes the same ten pilot symbols, each symbol having 16 samples, and is used for signal detections, AGC, synchronous timing, and rough CFO estimations.

On the other hand, the long TS includes the same two pilot symbols, each symbol having 64 samples, and is used for channel estimation and accurate CFO estimation. Obviously, it can be seen that both the short TS and the long TS belong to PP.

<PP caused problems>

The periodic pilot (PP) can be found from GPP at $\theta = 0$. More specifically, the CFO estimation value and the imbalance coefficient can be expressed from Equation (48), Equation (49), and Equation (50) as in the following equations.
[Equation 66]

$$\hat{\varepsilon} = \frac{N}{2\pi K}[\arccos\{\frac{u(1) + u(2)}{2}\}]$$

... (66)

[Equation 67]

$$\hat{\beta} = \frac{u(2) - u(1)}{2\sin(2\pi\hat{\varepsilon}K/N)}$$

... (67)

[Equation 68]

$$\hat{\mathbf{x}} = \frac{1}{\sin(2\pi\hat{\varepsilon}K/N)}[u(3), \cdots, u(L+2)]^T$$

... (68)

The above equations may pose two critical problems. One is that Equation (66) is an even function, and thus although the absolute value hat $\varepsilon$ can be found, the sign of the CFO estimation value cannot be determined. The other is that since the denominator of Equation (67) and Equation (68)is zero at $\varepsilon = 0$, the equations cannot be used to find $\beta$ and the vector x. Although the LLS problem of Equation (47) is not in a pathological condition (which refers to an insoluble status), the terms of $\beta$ and the vector x of Equation (44) vanish when the CFO is zero.
In practice, the MPP-based scheme may also encounter similar problems. For each pilot symbol of the PP, it can be set that hat K = K from the cycle prefix of the next pilot symbol, and a phase rotation of n/4 is removed from the related equations. This is an MPP-based scheme. Here, Equation (14) and Equation (17) are turned into the following equations.
[Equation 69]

$$\check{\mathbf{E}}(\varepsilon) = \left[ \begin{array}{cc} \check{\mathbf{e}}(\varepsilon) & \check{\mathbf{e}}^*(\varepsilon) \end{array} \right]$$

... (69)

[Equation 70]

$$\check{\mathbf{e}}(\varepsilon) = [e^{j\frac{2\pi\varepsilon K}{N}}, e^{j2\cdot\frac{2\pi\varepsilon K}{N}}, \ldots, e^{j\hat{M}\cdot\frac{2\pi\varepsilon K}{N}}]^T$$

... (70)

The evaluation function for CFO estimation is given by the following equation.
[Equation 71]

$$\check{J}(\tilde{\varepsilon}) = \mathrm{tr}\{\check{\mathbf{E}}(\tilde{\varepsilon})(\check{\mathbf{E}}^{\mathcal{H}}(\tilde{\varepsilon})\check{\mathbf{E}}(\tilde{\varepsilon}))^{-1}\check{\mathbf{E}}^{\mathcal{H}}(\tilde{\varepsilon})\hat{\mathbf{R}}\hat{\mathbf{R}}^{\mathcal{H}}\}$$

$$\ldots \; (71)$$

In the non-Patent Document 2, it is pointed out that tick J (tilde $\varepsilon$) is in a pathological status at tilde $\varepsilon$ = 0. However, what is more critically problematic lies in that tick J (tilde $\varepsilon$) is an even function of tilde $\varepsilon$ (which is proved at the end of the specification), and gives the maximum value at $\varepsilon$ and -$\varepsilon$, i.e., yields ambiguity in the sign of CFO.

On the other hand, substituting the relations of $\varepsilon$ = 0 and the removal of a $\pi/4$ phase rotation into Equation (12) and Equation (13) yields hat r(m, k) = a(k) + b(k), resulting in the relational expressions of the vector hat $R_Q$(m + 1) = vector hat $R_Q$(m) and the hat $r_I$(m + 1) = hat $r_I$(m).

With Bar $\omega_m$ being defined as $\omega$, it holds from $\omega$ = $2\pi$ hat $\varepsilon$K/N that bar $\omega_m$ = 0 for hat $\varepsilon$ = 0. Accordingly, substituting these relations into Equation (28) and Equation (29) leads to the vector A(m) = 0 and the vector B(m) = 0, so that the optimum solutions of the vector x and $\beta$ obtained here from Equation (27) are meaningless.

<Short and Long TS based Compensation>

From the analytical results above, a simultaneous compensation for the CFO and the I/Q imbalance in accordance with the IEEE 802.11a requires the determination of the sign of CFO and the algorithm for finding $\beta$ and the vector x in the absence of the CFO.

The P samples of the short TS are arranged in the matrix of 2x(P - K) dimensions expressed by the following equation. [Equation 72]

$$\mathbf{R} = \begin{bmatrix} r(n) & \cdots & r(n + P - K - 1) \\ r(n + K) & \cdots & r(n + P - 1) \end{bmatrix}$$

$$\ldots \; (72)$$

In the similar manner as with Equation (7), the following equation is obtained from Equation (5). [Equation 73]

$$\mathbf{R} = \mathbf{E}_1(\varepsilon)[\mathbf{a}^T \; \mathbf{b}^T]^T$$

$$\ldots \; (73)$$

In the equation above,
[Equation 74]

$$\mathbf{E}_1(\varepsilon) = \begin{bmatrix} 1 & 1 \\ e^{j\frac{2\pi\varepsilon K}{N}} & e^{-j\frac{2\pi\varepsilon K}{N}} \end{bmatrix}$$

$$\ldots \; (74)$$

[Equation 75]

$$\mathbf{a} = [a(n), \cdots, a(n + P - K - 1)]$$

$$\ldots \; (75)$$

[Equation 76]

$$\mathbf{b} = [b(n), \cdots, b(n + P - K - 1)]$$

$$\ldots \; (76)$$

Obviously, the vector "a" and the vector "b" represent the desired signal and the image interference signal, respectively. In general, the power of the vector "b" given by the I/Q imbalance is less than the power of the vector "a." It holds that $\varepsilon$ is included in the range of (-N/2K, N/2K), and if $\varepsilon$ is not equal to 0, the vector $E_1(\varepsilon)$ is a full-rank matrix as expressed in the following equation.

[Equation 77]

$$\begin{bmatrix} \mathbf{a} \\ \mathbf{b} \end{bmatrix} = \mathbf{E}_1^{-1}(\varepsilon)\mathbf{R} = \frac{1}{-j \cdot 2\sin(2\pi\varepsilon K/N)}\mathbf{E}_2\mathbf{R} \qquad \dots (77)$$

In the equation above, the relation expressed by the following equation is given.

[Equation 78]

$$\mathbf{E}_2(\varepsilon) = \begin{bmatrix} e^{-j\frac{2\pi\varepsilon K}{N}} & -1 \\ -e^{j\frac{2\pi\varepsilon K}{N}} & 1 \end{bmatrix} \qquad \dots (78)$$

Furthermore, since the vector $E_1(-\varepsilon)$ is a matrix with the column elements of the vector $E_1(\varepsilon)$ replaced and the relation of the vector $E_1(-\varepsilon)$ = the vector $E_1{}^*(\varepsilon)$ holds, the relational expression is obtained as below.

[Equation 79]

$$\begin{bmatrix} \mathbf{b} \\ \mathbf{a} \end{bmatrix} = \mathbf{E}_1^{-1}(-\varepsilon)\mathbf{R} = \frac{1}{j \cdot 2\sin(2\pi\varepsilon K/N)}\mathbf{E}_2^*\mathbf{R} \qquad \dots (79)$$

These two relational expressions imply that the sign of the absolute value hat $\varepsilon$ obtained from Equation (66) can be determined by comparing the power of the first row and the second row of Equation (80).

[Equation 80]

$$\mathbf{E}_2\big(|\hat{\varepsilon}|\big)\mathbf{R} \qquad \dots (80)$$

In other words, if a first row norm is greater than a second row norm, then the CFO estimation value is the absolute value of hat $\varepsilon$, whereas if the first row norm is less than the second row norm, then the CFO estimation value is the "-" absolute value of hat $\varepsilon$.

According to this simple determination of the sign of CFO, the CFO estimation range is extremely important in the absence of the I/Q imbalance, that is, it is critical that $\varepsilon$ lies in the range of (-N/2K, N/2K). Furthermore, use is made of the vector $E_1(0)$ being a unit matrix to check the existence of CFO in accordance with Equation (81) which is the conventional autocorrelation based scheme.

[Equation 81]

$$\hat{\varepsilon}_a = \frac{N}{2\pi K}\arg\{ \sum_{k=0}^{P-K-1} r^*(n+k)r(n+k+K)\} \qquad \dots (81)$$

Note that if the absolute value hat $\varepsilon_a < \Delta\varepsilon$, then hat $\varepsilon = 0$. However, $\Delta\varepsilon$ is a threshold value and is the same as the search resolution of tick J (hat ε) in the MPP-based scheme.

On the other hand, to find β and the vector x, use is made of the frequency domain representation (FDR) of the short TS and the long TS known in the receiver. It should be noted that there exists a transpose matrix of twelve non-zero elements ($S_{t,1}$, ..., $S_{t,12}$) in the FDR of the short TS. To find the time domain representation of the short TS, use is made of the matrix expressed by the following equation which includes twelve fixed subcarriers.

[Equation 82]

$$\mathbf{W}_t = [\mathbf{f}_{64}^4, \mathbf{f}_{64}^8, \cdots, \mathbf{f}_{64}^{24}, \mathbf{f}_{64}^{40}, \mathbf{f}_{64}^{44}, \cdots, \mathbf{f}_{64}^{60}]$$

$$\ldots (82)$$

In the above equation, the vector $f_N^i$ denotes the (I + 1) - th column vector of the N×N IDFT matrix $F^H$. Furthermore, the diagonal matrix expressed by the following equation is given.

[Equation 83]

$$\mathbf{S}_t = \mathrm{diag}\{S_{t,1}, \cdots, S_{t,12}\}$$

$$\ldots (83)$$

In the same manner, the diagonal matrix vector $S_T$ is constructed of the same twelve subcarrier elements or the FDR of the long TS.

[Equation 84]

$$\mathbf{S}_T = \mathrm{diag}\{S_{T,1}, \cdots, S_{T,12}\}$$

$$\ldots (84)$$

The four pilot symbols from the endmost of the short TS and the pilot symbol on the forefront stage of the long TS are used, in the case of which they are obviously two types of OFDM symbols that are different from each other. First, the following equations are defined.

[Equation 85]

$$\mathbf{R}_{t,Q} = \begin{bmatrix} r_Q(\hat{n} + \hat{L}) & \cdots & r_Q(\hat{n}) & \cdots & \dot{r}_Q(\hat{n} - \hat{L}) \\ r_Q(\hat{n} + \hat{L} + 1) & \cdots & r_Q(\hat{n} + 1) & \cdots & r_Q(\hat{n} - \dot{L} - 1) \\ \vdots & \vdots & \vdots & \vdots & \vdots \\ r_Q(\hat{n} - \hat{L} + N - 1) & \cdots & r_Q(\hat{n} + N - 1) & \cdots & r_Q(\hat{n} - \hat{L} + N - 1) \end{bmatrix}$$

$$\ldots (85)$$

[Equation 86]

$$\mathbf{r}_{t,I} = [r_I(\hat{n}), \cdots, r_I(\hat{n} + N - 1)]^T$$

$$\ldots (86)$$

[Equation 87]

$$\mathbf{R}_{T,Q} = \begin{bmatrix} r_Q\left(\hat{n}+\hat{L}\right) & \cdots & r_Q(\hat{n}), & \cdots & r_Q\left(\hat{n}-\hat{L}\right) \\ r_Q\left(\hat{n}+\hat{L}+1\right) & \cdots & r_Q\left(\hat{n}+1\right), & \cdots & r_Q\left(\hat{n}-\hat{L}+1\right) \\ \vdots & & \vdots & & \vdots \\ r_Q\left(\hat{n}+\hat{L}+N-1\right) & \cdots & r_Q\left(\hat{n}+N-1\right), & \cdots & r_Q\left(\hat{n}-\hat{L}+N-1\right) \end{bmatrix}$$

$$\cdots \ (87)$$

[Equation 88]

$$\mathbf{r}_{T,I} = \left[ r_I(\hat{n}), \quad \cdots \quad r_I(\hat{n}+N-1) \right]^T$$

$$\cdots \ (88)$$

In the equations above, hat n is the index of the first sample of the received $t_7$. Assuming that tick K is the sample spacing between $t_7$ and $T_1$, and putting hat n into (hat n + hat K) will makes it possible to determine the vector $r_{T,I}$ and the vector $R_{T,Q}$ for the first pilot symbol of the long TS.

When the channel has an invariable preamble interval and the I/Q imbalance is compensated for, the equation below is given.

[Equation 89]

$$\mathbf{Z}_t(\mathbf{r}_{t,I} + j(\mathbf{R}_{t,Q}\mathbf{x} + \beta\mathbf{r}_{t,I})) = \mathbf{Z}_T(\mathbf{r}_{T,I} + j(\mathbf{R}_{T,Q}\mathbf{x} + \beta\mathbf{r}_{T,I}))$$

$$\cdots \ (89)$$

In the equation above, the following relational expressions can be given as below.

[Equation 90]

$$\mathbf{Z}_t \ = \ e^{j2\pi\varepsilon\check{K}/N}\mathbf{S}_t^{-1}\mathbf{W}_t^{\mathcal{H}}\mathbf{\Gamma}^{\mathcal{H}}(\varepsilon)$$

$$\cdots \ (90)$$

[Equation 91]

$$\mathbf{Z}_T \ = \ \mathbf{S}_T^{-1}\mathbf{W}_t^{\mathcal{H}}\mathbf{\Gamma}^{\mathcal{H}}(\varepsilon)$$

$$\cdots \ (91)$$

[Equation 92]

$$\mathbf{\Gamma}(\varepsilon) \ = \ \mathrm{diag}\{1, e^{j\frac{2\pi\varepsilon}{N}}, \ldots, e^{j\frac{2\pi\varepsilon(N-1)}{N}}\}$$

$$\cdots \ (92)$$

Here, using the LLS algorithm, the optimum solution can be found from Equation (81) as in the following equation.

[Equation 93]

$$\begin{bmatrix} \hat{\mathbf{x}} \\ \hat{\beta} \end{bmatrix} = \mathbb{A}^\dagger\mathbb{B}$$

$$\cdots \ (93)$$

In the equation above,
[Equation 94]

$$A = \begin{bmatrix} Z_{t,Q}R_{t,Q} - Z_{T,Q}R_{T,Q} & Z_{t,Q}r_{t,I} - Z_{T,Q}r_{T,I} \\ Z_{T,I}R_{T,Q} - Z_{t,I}R_{t,Q} & Z_{T,I}r_{T,I} - Z_{t,I}r_{t,I} \end{bmatrix}$$

... (94)

[Equation 95]

$$B = \begin{bmatrix} Z_{t,I}r_{t,I} - Z_{T,I}r_{T,I} \\ Z_{t,Q}r_{t,I} - Z_{T,Q}r_{T,I} \end{bmatrix}$$

... (95)

In the above equations, the vector $Z_{t,I}$, the vector $Z_{t,Q}$, the vector $Z_{t,I}$, and the vector $Z_{T,Q}$ are the real part and the imaginary part of the vector $Z_t$ and the vector $Z_T$, respectively. Since the vector $S_t$ and the vector $S_T$ are not equal, the shaded vector A and the shaded vector B are a full-rank matrix even for $\varepsilon = 0$. Accordingly, $\beta$ and the vector x can be determined from Equation (90) even in the absence of CFO.

In practice, this algorithm is applicable even when it does not hold that $\varepsilon = 0$; however, it is used only when the CFO estimation value is close to zero because of its heavy calculation load. In practice, the samples of the short TS cannot always constitute an OFDM symbol of N samples.

In such a case, although the CFO has just been estimated, the left side of Equation (86) has to be corrected. Assume that use can be made of only $t_9$ and $t_{10}$ without loss of generality. Here, the vector $R_{t,Q}$ and the vector $r_{T,I}$ have a row of size N/2.

[Equation 96]

$$\hat{W}_t = [f_{32}^2, f_{32}^4, \cdots, f_{32}^{12}, f_{32}^{20}, f_{32}^{22}, \cdots, f_{32}^{30}]$$

... (96)

[Equation 97]

$$\hat{\Gamma}(\varepsilon) = \mathrm{diag}\{1, e^{j\frac{2\pi\varepsilon}{N}}, \ldots, e^{j\frac{2\pi\varepsilon(N/2-1)}{N}}\}$$

... (97)

The equations above can be replaced by the vector $Z_t$ expressed by the following equation, thereby allowing for obtaining $\beta$ and the vector x from Equation (64).
[Equation 98]

$$\hat{Z}_t = \frac{1}{\sqrt{2}} e^{j\frac{2\pi\varepsilon(\tilde{K}-2K)}{N}} S_t^{-1} \hat{W}_t^{\mathcal{H}} \hat{\Gamma}^{\mathcal{H}}(\varepsilon)$$

... (98)

In summary, using the CFO enhanced estimation method (CEE) involving the detection of CFO signs and the autocorrelation based CFO estimator as well as the algorithm based on the short TS and the long TS, the GPP-based scheme can be applied, for example, to the IEEE 802.11a. Since the structure of PP for synchronization and the pilot for channel estimation are generalized, the present invention is applicable to other wireless standards.

On the other hand, to estimate the sign of CFO, the following determination method can also be employed. The cost function for determining a sign using the matrices $Z_t$ and $Z_T$, and the vectors double-dot $r_t$ and $r_T$ is given as in Equation (96) under the condition that hat $\varepsilon$ is not zero.

[Equation 99]

$$J\left(\left|\hat{\varepsilon}\right|\right) = \left\|\mathbf{Z}_t \ddot{\mathbf{r}}_t - \mathbf{Z}_T \ddot{\mathbf{r}}_T\right\|^2 \qquad \qquad \cdots\ (99)$$

Here, J (the "-" absolute value hat $\varepsilon$) corresponds to the opposite of CFO. Accordingly, the CFO is positive if J (the "-" absolute value hat $\varepsilon$) is greater than J (the absolute value hat $\varepsilon$), and is negative in the opposite case.

Now, a description will be made to a specific embodiment. This embodiment takes as an example a signal according to the IEEE 802.11a WLAN. Accordingly, there exists no phase difference $\theta$ between pilot signals. That is, $\theta = 0$. The hardware structure is the same as that of Fig. 2.

Fig. 8 shows the processing flow followed by the control section. When the processing has started (S100), the determination of termination is first made (S102), and then data is acquired (S104) to check if CFO is zero (S106). This determination is made by knowing if hat $\varepsilon a$ is less than $\Delta\varepsilon$ according to Equation (58) for determining CFO. If the CFO is present, the CFO is determined (S108). The CFO is determined basically in the same manner as explained in relation to the first embodiment. Finally, the CFO estimation value, and the compensation coefficients for the I/Q imbalance, i.e., the $\beta$ and the vector x are determined from Equation (48), Equation (49), and Equation (50).

Now, the sign of CFO is determined (S110). The determination of the sign of CFO is carried out by comparing the first row norm with the second row norm of Equation (80). Alternatively, it may also be acceptable to use the determination cost function J of Equation (96). Then, the sign of CFO is determined and the I/Q imbalance compensation coefficient is found (S112), then performing the compensation processing (S114). The compensation processing is the same as the compensation processing discussed in the first embodiment.

If the CFO has been determined to be zero, the I/Q imbalance compensation coefficients, i.e., $\beta$ and the vector x are determined based on Equation (93) (S116). Then, the compensation processing is performed with the CFO being zero (S114). The compensation processing can be carried out in the same manner as with the case of the CFO being not zero. Additionally, only the CFO compensation processing may be skipped. This is because the CFO compensation processing is carried out only after the compensation for the I/Q imbalance has been completed.

Now, a detailed description will be made to the contents of each processing.
Upon reception of the I data and the Q data, the controller acquires P samples from the short TS. Then, the controller acquires the (P - K) pieces of data (hereinafter referred to as the "n series data") from the first piece of data, and the (P - K) pieces of data (hereinafter referred to as the "n + K series data") from the K-th. Note that these pieces of data are a complex number. More specifically, the complex number has the I data as its real part and the Q data as its imaginary part.

To realize Equation (81) for determining CFO, the process determines the sum of products of the conjugate complex number of the n series data and the complex number of the (n + K) series. The conjugate complex number of the n series data is the complex number obtained by multiplying the sign of the imaginary part by minus one. This is the multiplication of complex numbers, yielding a resulting complex number. Accordingly, its sum is also a complex number. Now, the process determines the argument (arg) of the complex number. More specifically, the process determines the angle between the real part and the imaginary part using the arctan function. The argument is multiplied by $N/(2\pi K)$ to find hat $\varepsilon_a$.

Now, a description will be made to the determination of the sign of CFO. To make this determination, the matrix R of Equation (72) is found and the matrix product of the matrix $E_2$ (the absolute value hat $\varepsilon$) is determined. The matrix R is a matrix with the n series data disposed in the first row and the (n + K) series data placed in the second row. Of course, the individual elements are a complex number. The process determines the first row norm and the second row norm of the matrix product. The norm is defined as the result of multiplying the element in the respective rows by the conjugate value and taking the square root of the sum thereof.

The CFO estimation value remains unchanged as the absolute value if the first row norm is greater than the second row norm, and if not, the CFO estimation value will be the absolute value multiplied by -1.

Now, a description will be made to the processing to be performed when the CFO is determined to be zero. The process chooses twelve non-zero elements $(S_{t,1},...,S_{t,12})$ from four symbols, i.e., $t_7$ to $t_{10}$ of the short TS. In particular, it is assumed here that twelve subcarriers, i.e., subcarriers 4, 8, 12, 16, 20, 24, 40, 44, 48, 52, 56, and 60 among 64 subcarriers transmit non-zero elements.

Then, the process forms a matrix of the subcarriers of Equation (93). Note that each element is the (i + 1)-th column vector of the following IDFT matrix $F^H$. Note that the IDFT is known from the communication system specification.
[Equation 100]

$$\mathbf{F}_N = \frac{1}{\sqrt{N}} \begin{bmatrix} 1 & e^{j\frac{2\pi \cdot 1 \cdot 0}{N}} & \cdots & \cdots & e^{j\frac{2\pi \cdot (N-1) \cdot 0}{N}} \\ 1 & e^{j\frac{2\pi \cdot 1 \cdot 1}{N}} & & & e^{j\frac{2\pi \cdot (N-1) \cdot 1}{N}} \\ \vdots & & \ddots & & \vdots \\ \vdots & & & \ddots & \vdots \\ 1 & e^{j\frac{2\pi \cdot 1 \cdot (N-1)}{N}} & \cdots & \cdots & e^{j\frac{2\pi \cdot (N-1) \cdot (N-1)}{N}} \end{bmatrix}$$

... (100)

Furthermore, the respective element is the diagonal matrix of (83).
The same processing is also carried out for the long TS. The subcarriers to be chosen are the same as those selected for the short TS. The corresponding elements are $(S_{T,1},..., S_{T,12})$. These elements and subcarriers have known values and thus can be determined in advance.

Then, the process acquires N pieces of data from the (hat n)-th of the t7 symbol in the short TS. More precisely, the data is (N + hat L) pieces of data from the (hat n - hat L)-th to the (hat n - hat L + N - 1)-th. These pieces of data are acquired for both the 1-branch and the Q-branch. Then, the Q-branch side data is used to form the matrix $R_{t,Q}$ of Equation (84) and the I-branch side data to form the $r_{t,I}$.

In the same manner, for the long TS, the process acquires (N + hat L) pieces of data from the (hat n - hat L)-th to the (hat n - hat L + N - 1)-th in the I-branch and the Q-branch, to form the matrix $R_{T,Q}$ in a similar manner and to form the matrix $r_{T,I}$ based on the I-branch side data.

The matrix $Z_t$ and the matrix $Z_T$ are determined from Equation (87) and Equation (88). To create these matrices, the matrix S, the matrix W, and the matrix Γ are required, but they have already been determined by Equation (83), Equation (83), and Equation (89). The preparation having been made so far makes it possible to create the shaded vector A and the shaded vector B of Equation (91) and Equation (92). Then, based on this, the process can determine β and the vector x from Equation (90). Note that Equation (90) determines the pseudo-inverse matrix of the shaded vector; however, as described in the first embodiment, another well-known method may also be used to determine β and the vector x.

Note that in the discussions above, four symbols of the short TS were used. However, the invention is not limited to these four symbols. For example, two symbols may also be used to provide the same effects as above. For example, in the case where $t_9$ and $t_{10}$ of the short TS are used, the subcarriers can be chosen as in Equation (93), so that the matrices r and $Z_t$ are substituted into Equation (94) or Equation (95) to determine β and the vector x in the same manner.

[Implementation example]

<Simulation results>

Simulations were performed to verify the effectiveness of the GPP-based scheme according to the present invention. To this end, 64-QAM data modulated OFDM signals were used. Note that B = 20MHz, N = 64, and $N_{GI}$ = 16. The frequency selective fading channel was the one with the power profile attenuated exponentially, the CFO was 90KHz, and the I/Q imbalance was adopted from the two cases of Non-Patent Document 2.

Case A) α = 1dB, φ = 5°, and the non-frequency-selective and the frequency selective imbalance with the vector $g_I$ being the transpose matrix of (1,0,1) and the vector $g_Q$ being the transpose matrix of (0,1,1).

Case B) α = 1dB, φ = 5°, and the non-frequency-selective imbalance with the vector $g_I$ and the vector $g_Q$ being the transpose matrix of (1,0).

Under the conditions of M = 10, K = 16, and L = 5, a comparison was made between the MGPP-based scheme and the MPP-based scheme. As for the MPP-based scheme, the search range of ε is (-0.48, 0.48), and the search interval is Δε = 0.01. Taking into account the effects of the AGC and the residual direct current offset, employed were hat M = 6 pilot symbols and P = 64 samples.

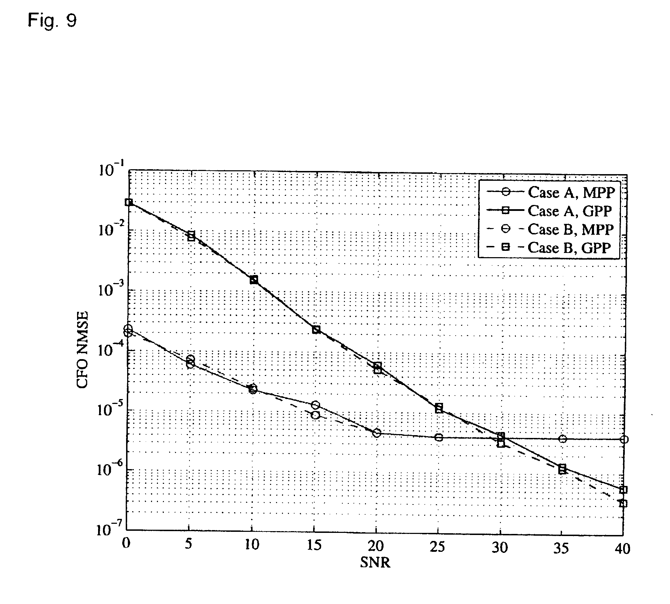

Fig. 9 is a view showing a comparison between the mean square error E $((ε - hat ε)^2)$ of the normalized CFO and SNR. The GPP-based scheme gives good estimation results, whereas the MPP-based scheme exhibits an error flow at high SNR because of the absence of the optimum CFO value at the search points.

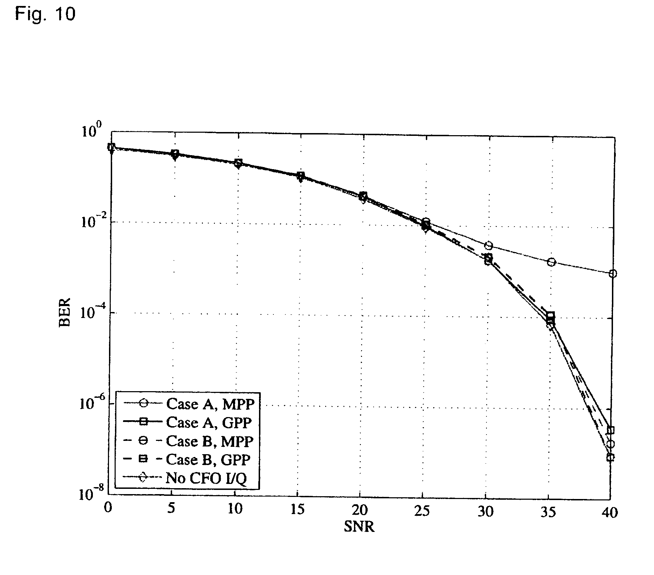

Fig. 10 shows the characteristics of the bit error rate (BER) versus SNR. For information, note that the characteristic with no CFO and I/Q imbalance (No CFO I/Q) is also shown. From the figure, it can be seen that the GPP-based scheme perfectly compensates for the CFO and the imbalance.

On the other hand, the MPP-based scheme causes an error flow at high SNR in Case A. This error flow was mainly caused by being incapable of taking the GI removal precisely, i.e., grasping the convolution structure with accuracy. It was also caused by the assumption that the timing error was to occur before compensation and then to be corrected.

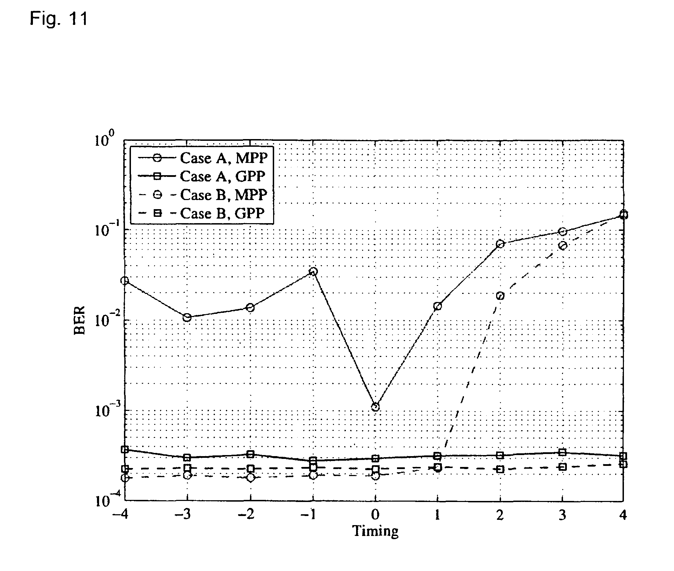

Fig. 11 shows that the GPP-based scheme is hardly affected by the timing error. On the other hand, it is shown in Case A that the MPP-based scheme will not be properly followed without perfectly synchronous timing.

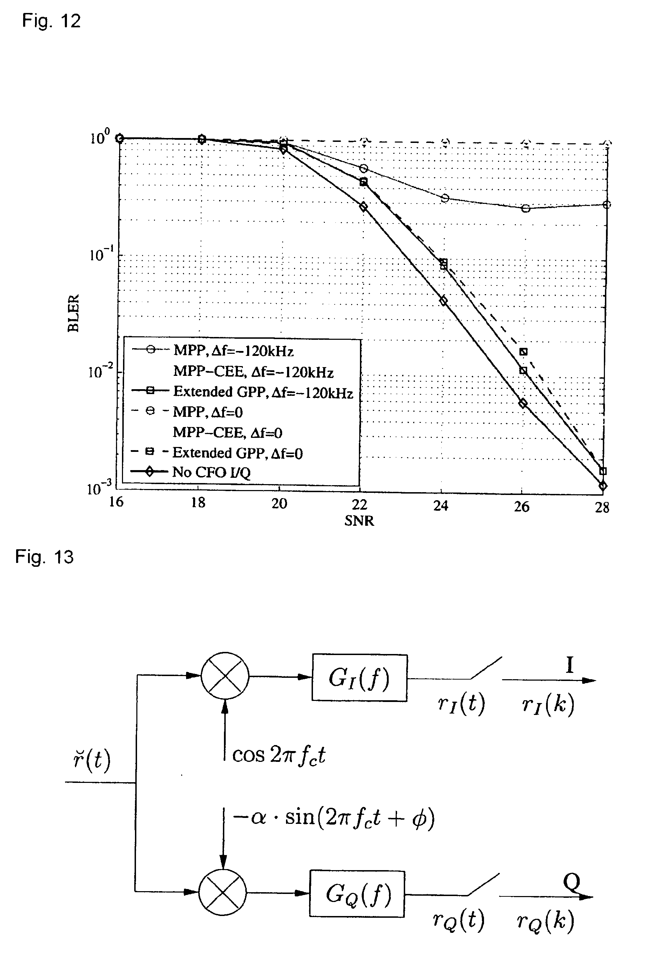

Now, Fig. 12 shows simulation results for the IEEE 802.11a WLAN which works in the 36 Mbps mode of operation. This simulation employed the block error rate (BLER) for a 1000-byte block size in order to measure operations in accordance with the MPP-based scheme, the MPP-based scheme having CEE (MPP-CEE), and the extended GPP-based scheme.

It can be seen regarding the MPP-based scheme that the ambiguity of the sign of CFO prevents reaching a BLER of 0.1 even at high SNR. It is seen that the MPP-CEE does not operate properly at CFO = zero but is provided with a fairly improved characteristic. On the other hand, it can also be seen that the extended GPP-based scheme operates properly in any cases.

A new technique is suggested for simultaneous compensation of CFO and I/Q imbalance. The basic mutual relations between pilots are studied and the NLS problem is changed into the LLS problem for estimation of CFO, whereby the present invention can analytically obtain all the CFO and imbalance coefficients. The invention realizes robust synchronous timing and significant reduction in calculation load.

Furthermore, since the periodic pilot (PP) is contained in GPP, ambiguity in determination of the sign of CFO and the problem of compensating for zero CFO can be addressed, thereby allowing the suggested technique to be applicable to the actual wireless standards such as the IEEE 802.11a WLAN. Furthermore, the effectiveness of the suggested technique was shown through the simulations for various CFO and I/Q imbalance compensations.

$$<\text{Proof of tick J (- tilde } \varepsilon) = \text{ tick J (tilde } \varepsilon)>$$

Equation (45) is rewritten into tick J (tilde $\varepsilon$) = tr{vector G(tilde $\varepsilon$) vector hat R vector hat $R^H$}. Here,

[Equation 101]

$$
\begin{aligned}
\mathbf{G}(\check{\varepsilon}) &= \check{\mathbf{E}}(\check{\varepsilon})(\check{\mathbf{E}}^{\mathcal{H}}(\check{\varepsilon})\check{\mathbf{E}}(\check{\varepsilon}))^{-1}\check{\mathbf{E}}^{\mathcal{H}}(\check{\varepsilon}) \\
&= \frac{\hat{M}}{\hat{M}^2 - |q|^2}\{\check{e}(\check{\varepsilon})\check{e}^{\mathcal{H}}(\check{\varepsilon}) + \check{e}^{*}(\check{\varepsilon})\check{e}^{T}(\check{\varepsilon}) - \frac{1}{\hat{M}}[q\check{e}(\check{\varepsilon})\check{e}^{T}(\check{\varepsilon}) + q^{*}\check{e}^{*}(\check{\varepsilon})\check{e}^{\mathcal{H}}(\check{\varepsilon})]\}
\end{aligned}
$$

$$\dots (101)$$

In the equation above, q = tick vector $e^H$ (tilde $\varepsilon$) tick vector $e^*$(tilde $\varepsilon$) is a scalar quantity. It can be seen from Equation (66) that vector G(tilde $\varepsilon$) is constant even when tick vector e (tilde $\varepsilon$) is replaced by tick vector $e^*$(tilde $\varepsilon$). Accordingly, from tick vector e (tilde $\varepsilon$) = tick vector $e^*$(tilde $\varepsilon$), vector G(- tilde $\varepsilon$) = vector G(tilde $\varepsilon$), resulting in tick J (- tilde $\varepsilon$) = tick J (tilde $\varepsilon$).

INDUSTRIAL APPLICABILITY

The present invention is applicable to the OFDM scheme communication method and those transmitters and receivers that implement the method.

Claims

1. A carrier frequency offsets, CFO, estimation method for receiving a signal having a pilot signal, demodulating the signal at a demodulator having an I-branch and a Q-branch, and then estimating a CFO of the signal, the method comprising the steps of:

digitizing the I-branch side signal of the received pilot signal into I data; and
digitizing the Q-branch side signal of the received pilot signal into Q data;
**characterised by**:

forming (P - K) samples from an n-th sample of the I data into the matrix $r_{1,l}$, wherein:

$$\mathbf{r}_{1,I} = [r_I(n), \cdots, r_I(n + P - K - 1)]^T$$

forming (P - K) samples from an (n + K)-th sample of the I data into the matrix $r_{2,I}$, wherein:

$$\mathbf{r}_{2,I} = \left[ r_I(n + K), \quad \cdots \quad r_I(n + P - 1) \right]^T$$

forming (P - K + (L - 1)/2) samples from an (n - (L - 1)/2)-th sample of the Q data into the matrix $R_{1,Q}$, wherein:

$$\mathbf{R}_{1,Q} = \begin{bmatrix} r_Q(n + \hat{L}) & \cdots & r_Q(n) & \cdots & r_Q(n - \hat{L}) \\ r_Q(n + 1 + \hat{L}) & \cdots & r_Q(n + 1) & \cdots & r_Q(n + 1 - \hat{L}) \\ \vdots & \vdots & \vdots & \vdots & \vdots \\ r_Q(n + P - K - 1 + \hat{L}) & \cdots & r_Q(n + P - K - 1) & \cdots & r_Q(n + P - K - 1 - \hat{L}) \end{bmatrix}$$

forming (P - K + (L - 1)/2) samples from an (n + K - (L - 1)/2)-th sample of the Q data into the matrix $R_{2,Q}$, wherein:

$$\mathbf{R}_{2,Q} = \begin{bmatrix} r_Q(n + K + \hat{L}) & \cdots & r_Q(n + K), & \cdots & r_Q(n + K - \hat{L}) \\ r_Q(n + K + 1 + \hat{L}) & \cdots & r_Q(n + K + 1), & \cdots & r_Q(n + K + 1 - \hat{L}) \\ \vdots & & \vdots & & \vdots \\ r_Q(n + P - 1 + \hat{L}) & \cdots & r_Q(n + P - 1), & \cdots & r_Q(n + P - 1 - \hat{L}) \end{bmatrix}$$

determining a matrix u being equal, when multiplied by $r_I$ obtained from $r_{1,I}$ and $r_{2,I}$, to A obtained from $r_{1,I}$, $r_{2,I}$, $R_{1,Q}$, and $R_{2,Q}$, wherein:

$$\mathbf{r}_I = \begin{bmatrix} \mathbf{r}_{2,I} \\ \mathbf{r}_{1,I} \end{bmatrix} \quad \text{and} \quad \Lambda = \begin{bmatrix} \mathbf{r}_{1,I} & \mathbf{0} & -\mathbf{R}_{1,Q} \\ \mathbf{0} & \mathbf{r}_{2,I} & \mathbf{R}_{2,Q} \end{bmatrix};$$

and
determining a CFO estimation value ε from first and second elements of the matrix u, wherein:

$$\hat{\varepsilon} = \frac{N}{2\pi K} [\arccos\{\frac{u(1) + u(2)}{2}\} - \theta].$$

2. An I/Q imbalance compensation coefficient calculation method for receiving a signal having a pilot signal, demodulating the signal at a demodulator having an I-branch and a Q-branch, and then calculating a compensation coefficient to compensate for the I/Q imbalance of the signal, the method comprising the steps of:

digitizing the I-branch side signal of the received pilot signal into I data; and
digitizing the Q-branch side signal of the received pilot signal into Q data;
charcterised by:

forming (P - K) samples from an n-th sample of the I data into the matrix $r_{1,I}$, wherein:

$$\mathbf{r}_{1,I} = [r_I(n), \cdots, r_I(n + P - K - 1)]^T ;$$

forming (P - K) samples from an (n + K)-th sample of the I data into the matrix $\mathbf{r}_{2,I}$, wherein:

$$\mathbf{r}_{2,I} = [r_I(n + K), \quad \cdots \quad r_I(n + P - 1)]^T ;$$

forming (P - K + (L - 1)/2) samples from an (n - (L - 1)/2)-th sample of the Q data into the matrix $\mathbf{R}_{1,Q}$, wherein:

$$\mathbf{R}_{1,Q} = \begin{bmatrix} r_Q(n + \hat{L}) & \cdots & r_Q(n) & \cdots & r_Q(n - \hat{L}) \\ r_Q(n + 1 + \hat{L}) & \cdots & r_Q(n + 1) & \cdots & r_Q(n + 1 - \hat{L}) \\ \vdots & \vdots & \vdots & \vdots & \vdots \\ r_Q(n + P - K - 1 + \hat{L}) & \cdots & r_Q(n + P - K - 1) & \cdots & r_Q(n + P - K - 1 - \hat{L}) \end{bmatrix} ;$$

forming (P - K + (L - 1)/2) samples from an (n + K - (L - 1)/2)-th sample of the Q data into the matrix $\mathbf{R}_{2,Q}$, wherein:

$$\mathbf{R}_{2,Q} = \begin{bmatrix} r_Q(n + K + \hat{L}) & \cdots & r_Q(n + K), & \cdots & r_Q(n + K - \hat{L}) \\ r_Q(n + K + 1 + \hat{L}) & \cdots & r_Q(n + K + 1), & \cdots & r_Q(n + K + 1 - \hat{L}) \\ \vdots & & \vdots & & \vdots \\ r_Q(n + P - 1 + \hat{L}) & \cdots & r_Q(n + P - 1), & \cdots & r_Q(n + P - 1 - \hat{L}) \end{bmatrix} ;$$

determining a matrix u being equal, when multiplied by $\mathbf{r}_I$ obtained from $\mathbf{r}_{1,I}$ and $\mathbf{r}_{2,I}$, to A obtained from $\mathbf{r}_{1,I}$, $\mathbf{r}_{2,I}$, $\mathbf{R}_{1,Q}$, and $\mathbf{R}_{2,Q}$, wherein:

$$\mathbf{r}_I = \begin{bmatrix} \mathbf{r}_{2,I} \\ \mathbf{r}_{1,I} \end{bmatrix} \quad \text{and} \quad \Lambda = \begin{bmatrix} \mathbf{r}_{1,I} & \mathbf{0} & -\mathbf{R}_{1,Q} \\ \mathbf{0} & \mathbf{r}_{2,I} & \mathbf{R}_{2,Q} \end{bmatrix} ;$$

determining an I/Q imbalance compensation coefficient $\beta$ from first and second elements of the matrix u and a carrier frequency offsets, CFO, value $\varepsilon$ based on $\hat{\beta}$, wherein;

$$\hat{\beta} = \frac{u(2) - u(1)}{2 \sin(2\pi \hat{\varepsilon} K/N + \theta)} ;$$

and
determining an I/Q imbalance compensation coefficient vector x from elements other than the first and second elements of the matrix u and the CFO value $\hat{\varepsilon}$ based on $\hat{x}$, wherein:

$$\hat{\mathbf{x}} = \frac{1}{\sin(2\pi \hat{\varepsilon} K/N + \theta)} [u(3), \cdots, u(L + 2)]^T .$$

3. An I/Q imbalance compensation method for receiving a signal having a pilot signal, demodulating the signal at a demodulator having an I-branch and a Q-branch, and thereafter compensating the signal, the method comprising the steps of:

digitizing the I-branch side signal of the received signal into I data;
digitizing the Q-branch side signal of the received signal into Q data;
multiplying the Q data by the vector x determined according to the method of claim 2;
multiplying the I data by β determined according to the method of claim 2;
adding data obtained by multiplying the I data by β to the Q data multiplied by the vector x to yield Qc data; and
determining a complex number with the I data employed as a real part and the Qc data employed as an imaginary part.

4.  A signal compensation method for receiving a signal having a pilot signal, demodulating the signal at a demodulator having an I-branch and a Q-branch, and thereafter compensating the signal, the method comprising the step of compensating the complex number determined in claim 3, based on the CFO estimation value determined by the method according to claim 1.

5.  A carrier frequency offsets, CFO, estimation method for receiving a signal having a pilot signal, demodulating the signal at a demodulator having an I-branch and a Q-branch, and then estimating a CFO of the signal, the method comprising the steps of:

digitizing the I-branch side signal of the received pilot signal into I data; and
digitizing the Q-branch side signal of the received pilot signal into Q data;
**characterised by**:

forming (P - K) samples from an n-th sample of the I data into the matrix $\mathbf{r}_{1,Q}$, wherein:

$$\mathbf{r_{1,Q}} = [r_Q(n), \cdots, r_Q(n + P - K - 1)]^T;$$

forming (P - K) samples from an (n + K)-th sample of the I data into the matrix $\mathbf{r}_{2,Q}$, wherein:

$$\mathbf{r_{2,Q}} = \left[ r_Q(n+K), \quad \cdots \quad r_Q(n+P-1) \right]^T;$$

forming (P - K + (L - 1)/2) samples from an (n - (L - 1)/2)-th sample of the Q data into the matrix $\mathbf{R}_{1,I}$, wherein:

$$\mathbf{R}_{1,I} = \begin{bmatrix} r_I(n+\hat{L}) & \cdots & r_I(n) & \cdots & r_I(n-\hat{L}) \\ r_I(n+1+\hat{L}) & \cdots & r_I(n+1) & \cdots & r_I(n+1-\hat{L}) \\ \vdots & \vdots & \vdots & \vdots & \vdots \\ r_I(n+P-K-1+\hat{L}) & \cdots & r_I(n+P-K-1) & \cdots & r_I(n+P-K-1-\hat{L}) \end{bmatrix};$$

forming (P - K + (L-1)/2) samples from an (n + K - (L - 1)/2)-th sample of the Q data into the matrix $\mathbf{R}_{2,I}$, wherein:

$$\mathbf{R}_{2,I} = \begin{bmatrix} r_I(n+K+\hat{L}) & \cdots & r_I(n+K), & \cdots & r_I(n+K-\hat{L}) \\ r_I(n+K+1+\hat{L}) & \cdots & r_I(n+K+1), & \cdots & r_I(n+K+1-\hat{L}) \\ \vdots & & \vdots & & \vdots \\ r_I(n+P-1+\hat{L}) & \cdots & r_I(n+P-1), & \cdots & r_I(n+P-1-\hat{L}) \end{bmatrix};$$

31

determining a matrix u being equal, when multiplied by $\mathbf{r}_Q$ obtained from $\mathbf{r}_{1,Q}$ and $\mathbf{r}_{2,Q}$, to $\wedge$ obtained from $\mathbf{r}_{1,Q}$, $\mathbf{r}_{2,Q}$, $\mathbf{R}_{1,I}$, and $\mathbf{R}_{2,I}$, wherein:

$$\mathbf{r}_Q = \begin{bmatrix} \mathbf{r}_{2,Q} \\ \mathbf{r}_{1,Q} \end{bmatrix} \quad \text{and} \quad \mathbf{\Lambda} = \begin{bmatrix} \mathbf{r}_{1,Q} & \mathbf{0} & \mathbf{R}_{1,I} \\ \mathbf{0} & \mathbf{r}_{2,Q} & -\mathbf{R}_{2,I} \end{bmatrix};$$

and

determining a CFO estimation value ε from first and second elements of the matrix u based on $\hat{\varepsilon}$, wherein:

$$\hat{\varepsilon} = \frac{N}{2\pi K}\{\arccos(\frac{u(1)+u(2)}{2}) - \theta\}.$$

6. An I/Q imbalance compensation coefficient calculation method for receiving a signal having a pilot signal, demodulating the signal at a demodulator having an I-branch and a Q-branch, and then calculating a compensation coefficient to compensate for the I/Q imbalance of the signal, the method comprising the steps of:

digitizing the I-branch side signal of the received pilot signal into I data; and
digitizing the Q-branch side signal of the received pilot signal into Q data;
**characterised by**:

forming (P - K) samples from an n-th sample of the I data into the matrix $\mathbf{r}_{1,Q}$, wherein:

$$\mathbf{r}_{1,Q} = [r_Q(n), \cdots, r_Q(n+P-K-1)]^T;$$

forming (P - K) samples from an (n + K)-th sample of the I data into the matrix $\mathbf{r}_{2,Q}$, wherein:

$$\mathbf{r}_{2,Q} = \begin{bmatrix} r_Q(n+K), & \cdots & r_Q(n+P-1) \end{bmatrix}^T;$$

forming (P - K + (L - 1)/2) samples from an (n - (L - 1)/2)-th sample of the Q data into the matrix $\mathbf{R}_{1,I}$, wherein:

$$\mathbf{R}_{1,I} = \begin{bmatrix} r_I(n+\hat{L}) & \cdots & r_I(n) & \cdots & r_I(n-\hat{L}) \\ r_I(n+1+\hat{L}) & \cdots & r_I(n+1) & \cdots & r_I(n+1-\hat{L}) \\ \vdots & \vdots & \vdots & \vdots & \vdots \\ r_I(n+P-K-1+\hat{L}) & \cdots & r_I(n+P-K-1) & \cdots & r_I(n+P-K-1-\hat{L}) \end{bmatrix};$$

forming (P - K + (L - 1)/2) samples from an (n + K - (L - 1)/2)-th sample of the Q data into the matrix $\mathbf{R}_{2,I}$, wherein:

$$\mathbf{R}_{2,I} = \begin{bmatrix} r_I(n+K+\hat{L}) & \cdots & r_I(n+K), & \cdots & r_I(n+K-\hat{L}) \\ r_I(n+K+1+\hat{L}) & \cdots & r_I(n+K+1), & \cdots & r_I(n+K+1-\hat{L}) \\ \vdots & & \vdots & & \vdots \\ r_I(n+P-1+\hat{L}) & \cdots & r_I(n+P-1), & \cdots & r_I(n+P-1-\hat{L}) \end{bmatrix};$$

determining a matrix u being equal, when multiplied by $r_Q$ obtained from $r_{1,Q}$ and $r_{2,Q}$, to A obtained from $r_{1,Q}$, $r_{2,Q}$, $R_{1,I}$, and $R_{2,I}$, wherein:

$$\mathbf{r}_Q = \begin{bmatrix} \mathbf{r}_{2,Q} \\ \mathbf{r}_{1,Q} \end{bmatrix} \quad \text{and} \quad \Lambda = \begin{bmatrix} \mathbf{r}_{1,Q} & \mathbf{0} & \mathbf{R}_{1,I} \\ \mathbf{0} & \mathbf{r}_{2,Q} & -\mathbf{R}_{2,I} \end{bmatrix} ;$$

determining an I/Q imbalance compensation coefficient $\hat{\beta}$ from first and second elements of the matrix u and a CFO value $\varepsilon$ based on $\hat{\beta}$, wherein:

$$\hat{\beta} = \frac{u(2) - u(1)}{2\sin(2\pi\hat{\varepsilon}K/N + \theta)} ;$$

and

determining an I/Q imbalance compensation coefficient vector x from elements other than the first and second elements of the matrix u and the CFO value $\hat{\varepsilon}$ based on $\hat{x}$, wherein:

$$\hat{\mathbf{x}} = \frac{1}{\sin(2\pi\hat{\varepsilon}K/N + \theta)} [u(3), \cdots, u(L+2)]^T .$$

7. An I/Q imbalance compensation method for receiving a signal having a pilot signal, demodulating the signal at a demodulator having an I-branch and a Q-branch, and thereafter compensating the signal, the method comprising the steps of:

   digitizing the I-branch side signal of the received signal into I data;
   digitizing the Q-branch side signal of the received signal into Q data;
   multiplying the I data by the vector x determined by the method according to claim 6;
   multiplying the Q data by $\beta$ determined according to the method of claim 6;
   adding data obtained by multiplying the Q data by $\beta$ to the I data multiplied by the vector x to yield Ic data; and
   determining a complex number with the Q data employed as a real part and the Qc data employed as an imaginary part.

8. A signal compensation method for receiving a signal having a pilot signal, demodulating the signal at a demodulator having an I-branch and a Q-branch, and thereafter compensating the signal, the method comprising the step of compensating the complex number determined in claim 7 based on the CFO estimation value determined by the method according to the claim 5.

9. A carrier frequency offsets, CFO, sign determination method for receiving a signal having a pilot signal, demodulating the signal at a demodulator having an I-branch and a Q-branch, and determining a sign of a CFO of the signal, the method comprising the steps of:

   digitizing the I-branch side signal of the received pilot signal into I data; and
   digitizing the Q-branch side signal of the received pilot signal into Q data;
   **characterised by**:

   creating a matrix R with a first row and a second row, the first row having (P - K) pieces of complex data with (P - K) samples from an n-th sample of the I data employed as a real part and (P - K) samples from an nth sample of the Q data employed as an imaginary part, the second row having (P - K) pieces of complex data with (P - K) samples from an (n + K)-th sample of the I data employed as a real part and (P - K) samples from an (n + K)-th sample of the Q data employed as an imaginary part, wherein:

$$\mathbf{R} = \begin{bmatrix} r(n) & \cdots & r(n+P-K-1) \\ r(n+K) & \cdots & r(n+P-1) \end{bmatrix};$$

creating a matrix $\mathbf{E}_2(\varepsilon)$ based on an absolute value of a CFO estimation value $\varepsilon$ whose sign is wanted to be determined, wherein:

$$\mathbf{E}_2(\varepsilon) = \begin{bmatrix} e^{-j\frac{2\pi\varepsilon K}{N}} & -1 \\ -e^{j\frac{2\pi\varepsilon K}{N}} & 1 \end{bmatrix};$$

multiplying R by $\mathbf{E}_2(\varepsilon)$; and
comparing a norm of a first row of the resulting matrix with a norm of a second row to determine that the sign of $\varepsilon$ is positive when the first row norm is greater than the second row norm.

10. An I/Q imbalance compensation coefficient calculation method for demodulating a signal at a demodulator having an I-branch and a Q-branch, the signal containing a pilot signal with a short TS and a long TS and with no phase difference between adjacent symbols, and for calculating a compensation coefficient to compensate for an I/Q imbalance of the signal, the method **characterised by** comprising the steps of:

selecting a predetermined subcarrier from the respective short TS and long TS to create the matrix $\mathbf{W}_t$, wherein:

$$\mathbf{W}_t = [\mathbf{f}_{64}^4, \mathbf{f}_{64}^8, \cdots, \mathbf{f}_{64}^{24}, \mathbf{f}_{64}^{40}, \mathbf{f}_{64}^{44}, \cdots, \mathbf{f}_{64}^{60}];$$

creating the diagonal matrix $\mathbf{S}_t$ from a subcarrier element of the short TS, wherein:

$$\mathbf{S}_t = \mathrm{diag}\{S_{t,1}, \cdots, S_{t,12}\};$$

creating a diagonal matrix $\mathbf{S}_T$ from a subcarrier element of the long TS, wherein:

$$\mathbf{S}_T = \mathrm{diag}\{S_{T,1}, \cdots, S_{T,12}\};$$

creating a diagonal matrix $\Gamma(\varepsilon)$ from a carrier frequency offsets, CFO, value whose absolute value is less than a predetermined value, wherein:

$$\Gamma(\varepsilon) = \mathrm{diag}\{1, e^{j\frac{2\pi\varepsilon}{N}}, \ldots, e^{j\frac{2\pi\varepsilon(N-1)}{N}}\};$$

creating $\mathbf{Z}_t$ from $\mathbf{W}_t$, $\mathbf{S}_t$, and $\Gamma(\varepsilon)$, wherein:

$$\mathbf{Z}_t = e^{j2\pi\varepsilon \check{K}/N} \mathbf{S}_t^{-1} \mathbf{W}_t^{\mathcal{H}} \Gamma^{\mathcal{H}}(\varepsilon);$$

creating $\mathbf{Z}_T$ from $\mathbf{W}_t$, $\mathbf{S}_T$, and $\Gamma(\varepsilon)$, wherein:

$$\mathbf{Z}_T \;=\; \mathbf{S}_T^{-1} \mathbf{W}_t^{\mathcal{H}} \mathbf{\Gamma}^{\mathcal{H}}(\varepsilon) \; ;$$

forming (P - K) samples from an n-th sample of the I data of the short TS into the matrix $\mathbf{r}_{t,I}$, wherein:

$$\mathbf{r}_{t,I} = [r_I(\hat{n}), \cdots , r_I(\hat{n} + N - 1)]^T \; ;$$

forming (P - K + (L - 1)/2) samples into the matrix $\mathbf{R}_{t,Q}$ from an (n - (L - 1)/2)-th sample of the Q data of the short TS, wherein:

$$\mathbf{R}_{t,Q} = \begin{bmatrix} r_Q(\hat{n} + \hat{L}) & \cdots & r_Q(\hat{n}) & \cdots & \hat{r}_Q(\hat{n} - \hat{L}) \\ r_Q(\hat{n} + \hat{L} + 1) & \cdots & r_Q(\hat{n} + 1) & \cdots & r_Q(\hat{n} - \hat{L} + 1) \\ \vdots & \vdots & \vdots & \vdots & \vdots \\ r_Q(\hat{n} + \hat{L} + N - 1) & \cdots & r_Q(\hat{n} + N - 1) & \cdots & r_Q(\hat{n} - \hat{L} + N - 1) \end{bmatrix} \; ;$$

forming (P - K) samples from an n-th sample of the I data of the long TS into the matrix $\mathbf{r}_{T,I}$, wherein:

$$\mathbf{r}_{T,I} = \left[ r_I(\hat{n}), \quad \cdots \quad r_I(\hat{n} + N - 1) \right]^T \; ;$$

forming (P - K + (L - 1)/2) samples from an (n - (L - 1)/2)-th sample of the Q data of the long TS into the matrix $\mathbf{R}_{T,Q}$, wherein:

$$\mathbf{R}_{T,Q} = \begin{bmatrix} r_Q(\hat{n} + \hat{L}) & \cdots & r_Q(\hat{n}), & \cdots & r_Q(\hat{n} - \hat{L}) \\ r_Q(\hat{n} + \hat{L} + 1) & \cdots & r_Q(\hat{n} + 1), & \cdots & r_Q(\hat{n} - \hat{L} + 1) \\ \vdots & & \vdots & & \vdots \\ r_Q(\hat{n} + \hat{L} + N - 1) & \cdots & r_Q(\hat{n} + N - 1), & \cdots & r_Q(\hat{n} - \hat{L} + N - 1) \end{bmatrix} \; ;$$

creating A from $\mathbf{R}_{t,Q}$, $\mathbf{r}_{t,I}$, $\mathbf{R}_{T,Q}$, $\mathbf{r}_{T,I}$, $\mathbf{Z}_t$, and $\mathbf{Z}_T$, wherein:

$$\mathbb{A} \;=\; \begin{bmatrix} \mathbf{Z}_{t,Q}\mathbf{R}_{t,Q} - \mathbf{Z}_{T,Q}\mathbf{R}_{T,Q} & \mathbf{Z}_{t,Q}\mathbf{r}_{t,I} - \mathbf{Z}_{T,Q}\mathbf{r}_{T,I} \\ \mathbf{Z}_{T,I}\mathbf{R}_{T,Q} - \mathbf{Z}_{t,I}\mathbf{R}_{t,Q} & \mathbf{Z}_{T,I}\mathbf{r}_{T,I} - \mathbf{Z}_{t,I}\mathbf{r}_{t,I} \end{bmatrix} \; ;$$

obtaining B from $\mathbf{r}_{t,I}$, $\mathbf{r}_{T,I}$, $\mathbf{Z}_t$, and $\mathbf{Z}_T$, wherein:

$$\mathbb{B} \;=\; \begin{bmatrix} \mathbf{Z}_{t,I}\mathbf{r}_{t,I} - \mathbf{Z}_{T,I}\mathbf{r}_{T,I} \\ \mathbf{Z}_{t,Q}\mathbf{r}_{t,I} - \mathbf{Z}_{T,Q}\mathbf{r}_{T,I} \end{bmatrix} \; ;$$

and
determining a vector being equal, when multiplied by A, to B.

**Patentansprüche**

1. Trägerfrequenz-Offsets, CFO, Schätzungsverfahren zum Empfangen eines Signals, das ein Pilotsignal aufweist, Demodulieren des Signals an einem Demodulator, der einen 1-Zweig und einen Q-Zweig aufweist und danach Schätzen eines CFO des Signals, wobei das Verfahren folgende Schritte umfasst:

Digitalisierung des I-Zweig seitigen Signals des empfangenen Pilotsignals in I-Daten; und
Digitalisierung des Q-Zweig seitigen Signals des empfangenen Pilotsignals in Q-Daten;
**gekennzeichnet durch**:

Formen von (P - K) Abtastungen aus einer n-ten Abtastung der I-Daten in die Matrix $\mathbf{r}_{1,I}$, wobei:

$$\mathbf{r}_{1,I} = [r_I(n), \cdots , r_I(n + P - K - 1)]^T ;$$

Formen von (P - K) Abtastungen aus einer (n + K)-ten Abtastung der I-Daten in die Matrix $\mathbf{r}_{2,I}$, wobei:

$$\mathbf{r}_{2,I} = \left[ r_I(n + K), \quad \cdots \quad r_I(n + P - 1) \right]^T ;$$

Formen von (P - K + (L - 1)/2) Abtastungen aus einer (n - (L - 20 1)/2)-ten Abtastung der Q-Daten in die Matrix $\mathbf{R}_{1,Q}$, wobei:

$$\mathbf{R}_{1,Q} = \begin{bmatrix} r_Q(n + \hat{L}) & \cdots & r_Q(n) & \cdots & r_Q(n - \hat{L}) \\ r_Q(n + 1 + \hat{L}) & \cdots & r_Q(n + 1) & \cdots & r_Q(n + 1 - \hat{L}) \\ \vdots & \vdots & \vdots & \vdots & \vdots \\ r_Q(n + P - K - 1 + \hat{L}) & \cdots & r_Q(n + P - K - 1) & \cdots & r_Q(n + P - K - 1 - \hat{L}) \end{bmatrix} ;$$

Formen von (P - K + (L - 1)/2) Abtastungen aus einer (n + K - (L -1)/2)-ten Abtastung der Q-Daten in die Matrix $R_{2,Q}$ wobei:

$$\mathbf{R}_{2,Q} = \begin{bmatrix} r_Q(n + K + \hat{L}) & \cdots & r_Q(n + K), & \cdots & r_Q(n + K - \hat{L}) \\ r_Q(n + K + 1 + \hat{L}) & \cdots & r_Q(n + K + 1), & \cdots & r_Q(n + K + 1 - \hat{L}) \\ \vdots & & \vdots & & \vdots \\ r_Q(n + P - 1 + \hat{L}) & \cdots & r_Q(n + P - 1), & \cdots & r_Q(n + P - 1 - \hat{L}) \end{bmatrix} ;$$

Determinieren, dass eine Matrix u gleich ist, wenn mit $\mathbf{r}_I$ multipliziert, erhalten aus $\mathbf{r}_{1,I}$ und $\mathbf{r}_{2,I}$ bis A erhalten aus $\mathbf{r}_{1,I}$, $\mathbf{r}_{2,I}$, $\mathbf{R}_{1,Q}$ und $\mathbf{R}_{2,Q}$ wobei:

$$\mathbf{r}_I = \begin{bmatrix} \mathbf{r}_{2,I} \\ \mathbf{r}_{1,I} \end{bmatrix} \text{ und } \Lambda = \begin{bmatrix} \mathbf{r}_{1,I} & \mathbf{0} & -\mathbf{R}_{1,Q} \\ \mathbf{0} & \mathbf{r}_{2,I} & \mathbf{R}_{2,Q} \end{bmatrix} ;$$

und
Determinieren eines CFO-Schätzungswerts ε aus ersten und zweiten Elementen der Matrix u, wobei:

$$\hat{\varepsilon} = \frac{N}{2\pi K}[\arccos\{\frac{u(1) + u(2)}{2}\} - \theta] .$$

2. Verfahren zur Berechnung des Kompensationskoeffizienten für I/Q-Ungleichgewicht zum Empfangen eines Signals, das ein Pilotsignal hat, Demodulieren des Signals an einem Demodulator, der einen I-Zweig und einen Q-Zweig hat und danach Berechnen eines Kompensationskoeffizienten, um das I/Q-Ungleichgewicht des Signals zu kompensieren, wobei das Verfahren folgende Schritte umfasst:

Digitalisierung des I-Zweig seitigen Signals des empfangenen Pilotsignals in I-Daten; und
Digitalisierung des Q-Zweig seitigen Signals des empfangenen Pilotsignals in Q-Daten;
**gekennzeichnet durch**:

Formen von (P - K) Abtastungen aus einer n-ten Abtastung der I-Daten in die Matrix $\mathbf{r}_{1,I}$, wobei:

$$\mathbf{r}_{1,I} = [r_I(n), \cdots, r_I(n + P - K - 1)]^T ;$$

Formen von (P - K) Abtastungen aus einer (n + K)-ten Abtastung der I-Daten in die Matrix $\mathbf{r}_{2,I}$, wobei:

$$\mathbf{r}_{2,I} = [r_I(n + K), \quad \cdots \quad r_I(n + P - 1)]^T ;$$

Formen von (P - K + (L - 1)/2) Abtastungen aus einer (n - (L - 1)/2)-ten Abtastung der Q-Daten in die Matrix $\mathbf{R}_{1,Q}$, wobei:

$$\mathbf{R}_{1,Q} = \begin{bmatrix} r_Q(n + \hat{L}) & \cdots & r_Q(n) & \cdots & r_Q(n - \hat{L}) \\ r_Q(n + 1 + \hat{L}) & \cdots & r_Q(n + 1) & \cdots & r_Q(n + 1 - \hat{L}) \\ \vdots & \vdots & \vdots & \vdots & \vdots \\ r_Q(n + P - K - 1 + \hat{L}) & \cdots & r_Q(n + P - K - 1) & \cdots & r_Q(n + P - K - 1 - \hat{L}) \end{bmatrix} ;$$

Formen von (P - K + (L - 1)/2) Abtastungen aus einer (n + K - (L - 1)/2)-ten Abtastung der Q-Daten in die Matrix $\mathbf{R}_{2,Q}$, wobei:

$$\mathbf{R}_{2,Q} = \begin{bmatrix} r_Q(n + K + \hat{L}) & \cdots & r_Q(n + K), & \cdots & r_Q(n + K - \hat{L}) \\ r_Q(n + K + 1 + \hat{L}) & \cdots & r_Q(n + K + 1), & \cdots & r_Q(n + K + 1 - \hat{L}) \\ \vdots & & \vdots & & \vdots \\ r_Q(n + P - 1 + \hat{L}) & \cdots & r_Q(n + P - 1), & \cdots & r_Q(n + P - 1 - \hat{L}) \end{bmatrix} ;$$

Determinieren, dass eine Matrix u gleich ist, wenn mit $\mathbf{r}_I$ multipliziert, erhalten aus $\mathbf{r}_{1,I}$ and $\mathbf{r}_{2,I}$, bis A erhalten aus $\mathbf{r}_{1,I}$, $\mathbf{r}_{2,I}$, $\mathbf{R}_{1,Q}$ und $\mathbf{R}_{2,Q}$, wobei:

$$\mathbf{r}_I = \begin{bmatrix} \mathbf{r}_{2,I} \\ \mathbf{r}_{1,I} \end{bmatrix} \quad \text{and} \quad \Lambda = \begin{bmatrix} \mathbf{r}_{1,I} & 0 & -\mathbf{R}_{1,Q} \\ 0 & \mathbf{r}_{2,I} & \mathbf{R}_{2,Q} \end{bmatrix} ;$$

Determinieren eines I/Q-Ungleichgewichts-Kompensationskoeffizienten β aus ersten und zweiten Elementen der Matrix u und eins Trägerfrequenz-Offsets, CFO, Wert ε beruhend auf $\hat{\beta}$, wobei;

$$\hat{\beta} \;=\; \frac{u(2) - u(1)}{2\sin(2\pi\hat{\varepsilon}K/N + \theta)};$$

und

Determinieren eines I/Q-Ungleichgewichts-Kompensationskoeffizientenvektors x aus Elementen anders als die ersten und zweiten Elemente der Matrix u und des CFO-Werts $\hat{\varepsilon}$ beruhend auf $\hat{x}$, wobei:

$$\hat{\mathbf{x}} \;=\; \frac{1}{\sin(2\pi\hat{\varepsilon}K/N + \theta)}[u(3), \cdots, u(L+2)]^{T}.$$

3. I/Q-Ungleichgewichts-Kompensationsverfahren zum Empfangen eines Signals, das ein Pilotsignal aufweist, Demodulieren des Signals an einem Demodulator mit einem I-Zweig und einem Q-Zweig und danach Kompensieren des Signals, wobei das Verfahren folgende Schritte umfasst:

Digitalisierung des I-Zweig seitigen Signals des empfangenen Signals in I-Daten;
Digitalisierung des Q-Zweig seitigen Signals des empfangenen Signals in Q-Daten;
Multiplizieren der Q-Daten mit dem Vektor x, determiniert nach dem Verfahren des Anspruchs 2;
Multiplizieren der I-Daten mit β, determiniert nach dem Verfahren des Anspruchs 2;
Hinzufügen von Daten, die durch Multiplizieren der I-Daten mit β erhalten wurden, zu den Q-Daten, die mit dem Vektor x multipliziert wurden, um Qc-Daten zu ergeben; und
Determinieren einer komplexen Zahl, wobei die I-Daten als der reelle Teil und die Qc-Daten als ein imaginärer Teil verwendet wurden.

4. Signalkompensationsverfahren zum Empfangen eines Signals, das ein Pilotsignal aufweist, Demodulieren des Signals an einem Demodulator, der einen I-Zeig und einen Q-Zweig aufweist und danach Kompensieren des Signals, wobei das Verfahren den Schritt der Kompensation der in Anspruch 3 determinierten komplexen Zahl, auf dem CFO-Schätzungswert beruhend umfasst, der vom Verfahren nach Anspruch 1 determiniert wurde.

5. Trägerfrequenz-Offsets, CFO, Schätzungsverfahren zum Empfangen eines Signals, das ein Pilotsignal aufweist, Demodulieren des Signals an einem Demodulator, der einen I-Zweig und einen Q-Zweig aufweist und danach Schätzen eines CFO des Signals, wobei das Verfahren folgende Schritte umfasst:

Digitalisierung des I-Zweig seitigen Signals des empfangenen Pilotsignals in I-Daten; und
Digitalisierung des Q-Zweig seitigen Signals des empfangenen Pilotsignals in Q-Daten;
**gekennzeichnet durch**:

Formen von (P - K) Abtastungen aus einer n-ten Abtastung der I-Daten in die Matrix $\mathbf{r}_{1,Q}$ wobei:

$$\mathbf{r}_{1,Q} = [r_Q(n), \cdots, r_Q(n+P-K-1)]^{T};$$

Formen von (P - K) Abtastungen aus einer (n + K)-ten Abtastung der I-Daten in die Matrix $\mathbf{r}_{2,Q}$, wobei:

$$\mathbf{r}_{2,Q} = [r_Q(n+K), \quad \cdots \quad r_Q(n+P-1)]^{T};$$

Formen von (P - K + (L - 1)/2) Abtastungen aus einer (n - (L - 1)/2)-ten Abtastung der Q-Daten in die Matrix $\mathbf{R}_{1,I}$, wobei:

$$\mathbf{R}_{1,I} = \begin{bmatrix} r_I(n+\hat{L}) & \cdots & r_I(n) & \cdots & r_I(n-\hat{L}) \\ r_I(n+1+\hat{L}) & \cdots & r_I(n+1) & \cdots & r_I(n+1-\hat{L}) \\ \vdots & \vdots & \vdots & \vdots & \vdots \\ r_I(n+P-K-1+\hat{L}) & \cdots & r_I(n+P-K-1) & \cdots & r_I(n+P-K-1-\hat{L}) \end{bmatrix};$$

Formen von (P - K + (L-1)/2) Abtastungen aus einer (n + K - (L - 1)/2)-ten Abtastung der Q-Daten in die Matrix $\mathbf{R}_{2,I}$, wobei:

$$\mathbf{R}_{2,I} = \begin{bmatrix} r_I(n+K+\hat{L}) & \cdots & r_I(n+K), & \cdots & r_I(n+K-\hat{L}) \\ r_I(n+K+1+\hat{L}) & \cdots & r_I(n+K+1), & \cdots & r_I(n+K+1-\hat{L}) \\ \vdots & & \vdots & & \vdots \\ r_I(n+P-1+\hat{L}) & \cdots & r_I(n+P-1), & \cdots & r_I(n+P-1-\hat{L}) \end{bmatrix};$$

Determinieren, dass eine Matrix u gleich ist, wenn mit $\mathbf{r}_Q$ multipliziert, erhalten aus $\mathbf{r}_{1,Q}$ and $\mathbf{r}_{2,Q}$, bis A erhalten aus $\mathbf{r}_{1,Q}, \mathbf{r}_{2,Q}, \mathbf{R}_{1,I}$ und $\mathbf{R}_{2,I}$ , wobei:

$$\mathbf{r}_Q = \begin{bmatrix} \mathbf{r}_{2,Q} \\ \mathbf{r}_{1,Q} \end{bmatrix} \quad \text{and} \quad \Lambda = \begin{bmatrix} \mathbf{r}_{1,Q} & \mathbf{0} & \mathbf{R}_{1,I} \\ \mathbf{0} & \mathbf{r}_{2,Q} & -\mathbf{R}_{2,I} \end{bmatrix};$$

and
Determinieren eines CFO-Schätzhungswerts ε faus ersten und zweiten Elementen der Matrix u auf $\hat{\varepsilon}$ beruhend, wobei:

$$\hat{\varepsilon} = \frac{N}{2\pi K} \{ \arccos(\frac{u(1)+u(2)}{2}) - \theta \}.$$

6. Verfahren zur Berechnung des Kompensationskoeffizienten für I/Q-Ungleichgewicht zum Empfangen eines Signals, das ein Pilotsignal hat, Demodulieren des Signals an einem Demodulator, der einen I-Zweig und einen Q-Zweig hat und danach Berechnen eines Kompensationskoeffizienten, um das I/Q-Ungleichgewicht des Signals zu kompensieren, wobei das Verfahren folgende Schritte umfasst:

Digitalisierung des I-Zweig seitigen Signals des empfangenen Pilotsignals in I-Daten; und
Digitalisierung des Q-Zweig seitigen Signals des empfangenen Pilotsignals in Q-Daten;
**gekennzeichnet durch**:

Formen von (P - K) Abtastungen aus einer n-ten Abtastung der I-Daten in die Matrix $\mathbf{r}_{1,Q}$, wobei:

$$\mathbf{r}_{1,Q} = [r_Q(n), \cdots, r_Q(n+P-K-1)]^T;$$

Formen von (P - K) Abtastungen aus einer (n + K)-ten Abtastung der I-Daten in die Matrix $\mathbf{r}_{2,Q}$ , wobei:

$$\mathbf{r}_{2,Q} = [r_Q(n+K), \cdots r_Q(n+P-1)]^T;$$

Formen von (P - K + (L - 1)/2) Abtastungen aus einer (n - (L - 1)/2)-ten Abtastung der Q-Daten in die Matrix $\mathbf{R}_{1,I}$, wobei:

$$\mathbf{R}_{1,I} = \begin{bmatrix} r_I(n+\hat{L}) & \cdots & r_I(n) & \cdots & r_I(n-\hat{L}) \\ r_I(n+1+\hat{L}) & \cdots & r_I(n+1) & \cdots & r_I(n+1-\hat{L}) \\ \vdots & \vdots & \vdots & \vdots & \vdots \\ r_I(n+P-K-1+\hat{L}) & \cdots & r_I(n+P-K-1) & \cdots & r_I(n+P-K-1-\hat{L}) \end{bmatrix};$$

Formen von (P - K + (L-1)/2) Abtastungen aus einer (n + K - (L - 20 1)/2)-ten Abtastung der Q-Daten in die Matrix $\mathbf{R}_{2,I}$, wobei:

$$\mathbf{R}_{2,I} = \begin{bmatrix} r_I(n+K+\hat{L}) & \cdots & r_I(n+K), & \cdots & r_I(n+K-\hat{L}) \\ r_I(n+K+1+\hat{L}) & \cdots & r_I(n+K+1), & \cdots & r_I(n+K+1-\hat{L}) \\ \vdots & & \vdots & & \vdots \\ r_I(n+P-1+\hat{L}) & \cdots & r_I(n+P-1), & \cdots & r_I(n+P-1-\hat{L}) \end{bmatrix};$$

Determinierren, dass eine Matrix u gleich ist, wenn mit $\mathbf{r}_Q$ multipliziert, erhalten aus $\mathbf{r}_{1,Q}$ and $\mathbf{r}_{2,Q}$, bis A erhalten aus $\mathbf{r}_{1,Q}$, $\mathbf{r}_{2,Q}$, $\mathbf{R}_{1,I}$, und $\mathbf{R}_{2,I}$, wobei:

$$\mathbf{r}_Q = \begin{bmatrix} \mathbf{r}_{2,Q} \\ \mathbf{r}_{1,Q} \end{bmatrix} \quad \text{and} \quad \Lambda = \begin{bmatrix} \mathbf{r}_{1,Q} & \mathbf{0} & \mathbf{R}_{1,I} \\ \mathbf{0} & \mathbf{r}_{2,Q} & -\mathbf{R}_{2,I} \end{bmatrix};$$

Determinieren eines I/Q-Ungleichgewichts-Kompensationskoeffizienten β aus ersten und zweiten Elementen der Matrix u und eines CFO-Werts ε beruhend auf $\hat{\beta}$, , wobei:

$$\hat{\beta} = \frac{u(2) - u(1)}{2\sin(2\pi\hat{\varepsilon}K/N + \theta)};$$

and
Determinieren eines I/Q-Ungleichgewichts-Kompensationskoeffizientenvektors x aus Elementen anders als die ersten und zweiten Elemente der Matrix u und des CFO-Werts $\hat{\varepsilon}$ beruhend auf $\hat{\mathbf{x}}$, wobei:

$$\hat{\mathbf{x}} = \frac{1}{\sin(2\pi\hat{\varepsilon}K/N + \theta)} [u(3), \cdots, u(L+2)]^T.$$

7. I/Q-Ungleichgewichts-Kompensationsverfahren zum Empfangen eines Signals, das ein Pilotsignal aufweist, Demodulieren des Signals an einem Demodulator mit einem I-Zweig und einem Q-Zweig und danach Kompensieren des Signals, wobei das Verfahren folgende Schritte umfasst:

Digitalisierung des I-Zweig seitigen Signals des empfangenen Signals in I-Daten;
Digitalisierung des Q-Zweig seitigen Signals des empfangenen Signals in Q-Daten;
Multiplizieren der I-Daten mit dem Vektor x, determiniert nach dem Verfahren des Anspruchs 6;

Multiplizieren der Q-Daten mit β, determiniert nach dem Verfahren des Anspruchs 6;
Hinzufügen von Daten, die durch Multiplizieren der Q-Daten mit β erhalten wurden, zu den I-Daten, die mit dem Vektor x multipliziert wurden, um Ic-Daten zu ergeben; und
Determinieren einer komplexen Zahl, wobei die Q-Daten als der reelle Teil und die Qc-Daten als ein imaginärer Teil verwendet wurden.

8. Signalkompensationsverfahren zum Empfangen eines Signals, das ein Pilotsignal aufweist, Demodulieren des Signals an einem Demodulator, der einen I-Zeig und einen Q-Zweig aufweist und danach Kompensieren des Signals, wobei das Verfahren den Schritt der Kompensation der in Anspruch 7 determinierten komplexen Zahl, auf dem CFO-Schätzungswert beruhend umfasst, der vom Verfahren nach Anspruch 5 determiniert wurde.

9. Trägerfrequenz-Offsets, CFO, Zeichen-Determinierungsverfahren zum Empfangen eines Signals, das ein Pilotsignal aufweist, Demodulieren des Signals an einem Demodulator, der einen I-Zweig und einen Q-Zweig aufweist und Determinieren eines CFO des Signals, wobei das Verfahren folgende Schritte umfasst:

Digitalisierung des I-Zweig seitigen Signals des empfangenen Pilotsignals in I-Daten; und
Digitalisierung des Q-Zweig seitigen Signals des empfangenen Pilotsignals in Q-Daten;
**gekennzeichnet durch**:

Schaffung einer Matrix R mit einer ersten Reihe und einer zweiten Reihe, wobei die erste Reihe (P - K) Stücke komplexer Daten mit (P - K) Abtastungen aus einer n-ten Abtastung der I-Daten aufweist, die als ein reeller Teil verwendet wurden und (P - K) Abtastungen aus einer n-ten Abtastung der Q-Daten aufweist, die als ein imaginärer Teil verwendet wurden, wobei die zweite Reihe (P - K) Stücke komplexer Daten mit (P - K) Abtastungen aus einer (n + K)-ten Abtastung der I-Daten aufweist, die als ein reeller Teil verwendet wurden und (P - K) Abtastungen aus einer (n + K)-ten Abtastung der Q-Daten aufweist, die als ein imaginärer Teil verwendet wurden, wobei:

$$\mathbf{R} = \begin{bmatrix} r(n) & \cdots & r(n + P - K - 1) \\ r(n + K) & \cdots & r(n + P - 1) \end{bmatrix};$$

Schaffung einer Matrix $\mathbf{E}_2(\varepsilon)$ beruhend auf einem absoluten Wert eines CFO-Schätzungswerts ε, dessen Zeichen zu determinieren erwünscht ist, wobei:

$$\mathbf{E}_2(\varepsilon) = \begin{bmatrix} e^{-j\frac{2\pi\varepsilon K}{N}} & -1 \\ -e^{j\frac{2\pi\varepsilon K}{N}} & 1 \end{bmatrix};$$

Multiplizieren von R mit $\mathbf{E}_2(\varepsilon)$; und
Vergleichen einr Norm einer ersten Reihe der resultierenden Matrix mit einer Norm einer zweiten Reihe, um zu determinieren, dass das Zeichen ε positiv ist, wenn die Norm der ersten Reihe größer als die Norm der zweiten Reihe ist.

10. Verfahren zur Berechnung des Kompensationskoeffizienten für I/Q-Ungleichgewicht zum Demodulieren eines Signals an einem Demodulator, der einen I-Zweig und einen Q-Zweig aufweist, wobei das Signal ein Pilotsignal mit einem kurzen TS und einem langen TS enthält und ohne Phasendifferenz zwischen benachbarten Symbolen und zum Berechnen eines Kompensationskoeffizienten, um für ein I/Q-Ungleichgewicht des Signals zu kompensieren, wobei das Verfahren **dadurch gekennzeichnet ist, dass** es folgende Schritte umfasst:

Selektieren eines vorgegebenen Unterträgers aus dem jeweiligen kurzen TS und langen TS, um die Matrix $\boldsymbol{W}_t$ zu schaffen, wobei:

$$\mathbf{W}_t = [\mathbf{f}_{64}^4, \mathbf{f}_{64}^8, \cdots, \mathbf{f}_{64}^{24}, \mathbf{f}_{64}^{40}, \mathbf{f}_{64}^{44}, \cdots, \mathbf{f}_{64}^{60}] \ ;$$

Schaffung der diagonalen Matrix $S_t$ aus einem Unterträgerelement des kurzen TS, wobei:

$$\mathbf{S}_t = \mathrm{diag}\{S_{t,1}, \cdots, S_{t,12}\} \ ;$$

Schaffung einer diagonalen Matrix $S_T$ aus einem Unterträgerelement des langen TS, wobei:

$$\mathbf{S}_T = \mathrm{diag}\{S_{T,1}, \cdots, S_{T,12}\} \ ;$$

Schaffung einer diagonalen Matrix $\Gamma(\varepsilon)$ aus einer Trägerfrequenz-Offsets, CFO, Wert, dessen absoluter Wert weniger als ein vorgegebener Wert ist, wobei:

$$\mathbf{\Gamma}(\varepsilon) = \mathrm{diag}\{1, e^{j\frac{2\pi\varepsilon}{N}}, \ldots, e^{j\frac{2\pi\varepsilon(N-1)}{N}}\} \ ;$$

Schaffung $\mathbf{Z}_t$ aus $\mathbf{W}_t$, $\mathbf{S}_t$, und $\Gamma(\varepsilon)$, wobei:

$$\mathbf{Z}_t = e^{j2\pi\varepsilon\check{K}/N} \mathbf{S}_t^{-1} \mathbf{W}_t^{\mathcal{H}} \mathbf{\Gamma}^{\mathcal{H}}(\varepsilon) \ ;$$

Schaffung $\mathbf{Z}_T$ aus $\mathbf{W}_t$, $\mathbf{S}_T$, und $\Gamma(\varepsilon)$ wobei:

$$\mathbf{Z}_T = \mathbf{S}_T^{-1} \mathbf{W}_t^{\mathcal{H}} \mathbf{\Gamma}^{\mathcal{H}}(\varepsilon) \ ;$$

Formen von (P - K) Abtastungen aus einer n-ten Abtastung der I-Daten des kurzen TS in die Matrix $\mathbf{r}_{t,I}$ , wobei:

$$\mathbf{r}_{t,I} = [r_I(\hat{n}), \cdots, r_I(\hat{n} + N - 1)]^T \ ;$$

Formen von (P - K + (L - 1)/2) Abtastungen in die Matrix $\mathbf{R}_{t,Q}$ aus einer (n - (L - 1)/2)-ten Abtastung der Q-Daten des kurzen TS, wobei:

$$\mathbf{R}_{t,Q} = \begin{bmatrix} r_Q(\hat{n} + \hat{L}) & \cdots & r_Q(\hat{n}) & \cdots & \hat{r}_Q(\hat{n} - \hat{L}) \\ r_Q(\hat{n} + \hat{L} + 1) & \cdots & r_Q(\hat{n} + 1) & \cdots & r_Q(\hat{n} - \hat{L} + 1) \\ \vdots & \vdots & \vdots & \vdots & \vdots \\ r_Q(\hat{n} + \hat{L} + N - 1) & \cdots & r_Q(\hat{n} + N - 1) & \cdots & r_Q(\hat{n} - \hat{L} + N - 1) \end{bmatrix} \ ;$$

Formen von (P - K) Abtastungen aus einer n-ten Abtastung der I-Daten des langen TS in die Matrix $\mathbf{r}_{T,I}$, wobei:

$$\mathbf{r}_{T,I} = [r_I(\hat{n}), \cdots r_I(\hat{n} + N - 1)]^T \ ;$$

Formen von (P - K + (L - 1)/2) Abtastungen aus einer (n - (L -1)/2)-ten Abtastung der Q-Daten des langen TS in die Matrix $\mathbf{R}_{T,Q}$, wobei:

$$
\mathbf{R}_{T,Q} = \begin{bmatrix}
r_Q(\hat{n}+\hat{L}) & \cdots & r_Q(\hat{n}), & \cdots & r_Q(\hat{n}-\hat{L}) \\
r_Q(\hat{n}+\hat{L}+1) & \cdots & r_Q(\hat{n}+1), & \cdots & r_Q(\hat{n}-\hat{L}+1) \\
\vdots & & \vdots & & \vdots \\
r_Q(\hat{n}+\hat{L}+N-1) & \cdots & r_Q(\hat{n}+N-1), & \cdots & r_Q(\hat{n}-\hat{L}+N-1)
\end{bmatrix}_;
$$

Schaffung A from $\mathbf{R}_{t,Q}$, $\mathbf{r}_{t,I}$, $\mathbf{R}_{T,Q}$, $\mathbf{r}_{T,I}$, $\mathbf{Z}_t$, and $\mathbf{Z}_T$, wobei:

$$
\mathbb{A} = \begin{bmatrix}
\mathbf{Z}_{t,Q}\mathbf{R}_{t,Q} - \mathbf{Z}_{T,Q}\mathbf{R}_{T,Q} & \mathbf{Z}_{t,Q}\mathbf{r}_{t,I} - \mathbf{Z}_{T,Q}\mathbf{r}_{T,I} \\
\mathbf{Z}_{T,I}\mathbf{R}_{T,Q} - \mathbf{Z}_{t,I}\mathbf{R}_{t,Q} & \mathbf{Z}_{T,I}\mathbf{r}_{T,I} - \mathbf{Z}_{t,I}\mathbf{r}_{t,I}
\end{bmatrix}_;
$$

Erhalten von B aus $\mathbf{r}_{t,I}$, $\mathbf{r}_{T,I}$, $\mathbf{Z}_t$, und $\mathbf{Z}_T$, wobei:

$$
\mathbb{B} = \begin{bmatrix}
\mathbf{Z}_{t,I}\mathbf{r}_{t,I} - \mathbf{Z}_{T,I}\mathbf{r}_{T,I} \\
\mathbf{Z}_{t,Q}\mathbf{r}_{t,I} - \mathbf{Z}_{T,Q}\mathbf{r}_{T,I}
\end{bmatrix}_;
$$

und
Determinieren, dass ein Vektor gleich ist, wenn mit A bis B multipliziert.

**Revendications**

1. Procédé d'estimation du décalage de fréquence de porteuse (CFO) pour la réception d'un signal ayant un signal pilote, de démodulation du signal au niveau d'un démodulateur ayant une branche I (en phase) et une branche Q (en quadrature), suivies de l'estimation d'un CFO du signal, le procédé comprenant les étapes consistant à :

   numériser le signal latéral sur la branche I du signal pilote reçu de manière à créer des données I ; et
   numériser le signal latéral sur la branche Q du signal pilote reçu de manière à créer des données Q ;
   **caractérisé par** :

   la formation d'échantillons (P - K) à partir d'un échantillon n des données I dans la matrice $\mathbf{r}_{1,I}$, dans laquelle :

$$
\mathbf{r}_{1,I} = [r_I(n), \cdots, r_I(n+P-K-1)]^T_;
$$

   la formation d'échantillons (P - K) à partir d'un échantillon (n + K) des données I dans la matrice $\mathbf{r}_{2,I}$, dans laquelle :

$$
\mathbf{r}_{2,I} = [r_I(n+K), \cdots r_I(n+P-1)]^T_;
$$

   la formation d'échantillons (P - K + (L - 1) / 2) à partir d'un échantillon (n - (L - 1) / 2) des donnés Q dans la

matrice $\mathbf{R}_{1,Q}$, dans laquelle :

$$\mathbf{R}_{1,Q} = \begin{bmatrix} r_Q(n + \hat{L}) & \cdots & r_Q(n) & \cdots & r_Q(n - \hat{L}) \\ r_Q(n + 1 + \hat{L}) & \cdots & r_Q(n + 1) & \cdots & r_Q(n + 1 - \hat{L}) \\ \vdots & \vdots & \vdots & \vdots & \vdots \\ r_Q(n + P - K - 1 + \hat{L}) & \cdots & r_Q(n + P - K - 1) & \cdots & r_Q(n + P - K - 1 - \hat{L}) \end{bmatrix} ;$$

la formation d'échantillons (P - K + (L - 1) / 2) à partir d'un échantillon (n + K - (L - 1) / 2) des données Q dans la matrice $\mathbf{R}_{2,Q}$, dans laquelle :

$$\mathbf{R}_{2,Q} = \begin{bmatrix} r_Q(n + K + \hat{L}) & \cdots & r_Q(n + K), & \cdots & r_Q(n + K - \hat{L}) \\ r_Q(n + K + 1 + \hat{L}) & \cdots & r_Q(n + K + 1), & \cdots & r_Q(n + K + 1 - \hat{L}) \\ \vdots & & \vdots & & \vdots \\ r_Q(n + P - 1 + \hat{L}) & \cdots & r_Q(n + P - 1), & \cdots & r_Q(n + P - 1 - \hat{L}) \end{bmatrix} ;$$

la détermination d'une matrice u étant égale lorsqu'elle est multipliée par r, obtenu à partir de r1,/ et r2,/, par A obtenu à partir de $\mathbf{r}_{1,/}$ et $\mathbf{r}_{2,/}$, $\mathbf{R}_{1,Q}$, et $\mathbf{R}_{2,Q}$, dans laquelle :

$$\mathbf{r}_I = \begin{bmatrix} \mathbf{r}_{2,I} \\ \mathbf{r}_{1,I} \end{bmatrix} \qquad \text{and} \qquad \mathbf{\Lambda} = \begin{bmatrix} \mathbf{r}_{1,I} & \mathbf{0} & -\mathbf{R}_{1,Q} \\ \mathbf{0} & \mathbf{r}_{2,I} & \mathbf{R}_{2,Q} \end{bmatrix} ;$$

and = et
et
la détermination d'une valeur d'estimation de CFO à partir des premier et deuxième éléments de la matrice u, dans laquelle :

$$\hat{\varepsilon} = \frac{N}{2\pi K} [\arccos\{\frac{u(1) + u(2)}{2}\} - \theta].$$

2. Procédé de calcul du coefficient de compensation de déséquilibre I/Q pour la réception d'un signal ayant un signal pilote, de démodulation du signal au niveau d'un démodulateur ayant une branche I et une branche Q, suivies du calcul d'un coefficient de compensation pour compenser le déséquilibre I/Q du signal, le procédé comprenant les étapes consistant à :

numériser le signal latéral sur la branche I du signal pilote reçu de manière à créer des données I ; et
numériser le signal latéral sur la branche Q du signal pilote reçu de manière à créer des données Q ;
**caractérisé par** :

la formation d'échantillons (P - K) à partir d'un échantillon n des données I dans la matrice $\mathbf{r}_{1,/}$, dans laquelle :

$$\mathbf{r}_{1,I} = [r_I(n), \cdots, r_I(n + P - K - 1)]^T ;$$

la formation d'échantillons (P - K) à partir d'un échantillon (n + K) des données I dans la matrice $\mathbf{r}_{2I}$, dans laquelle :

$$\mathbf{r}_{2,I} = \left[ r_I(n+K), \quad \cdots \quad r_I(n+P-1) \right]^T \; ;$$

la formation d'échantillons (P - K + (L - 1) /2) à partir d'un échantillon (n - (L - 1) / 2) des données Q dans la matrice $\mathbf{R}_{1,Q}$, dans laquelle :

$$\mathbf{R}_{1,Q} = \begin{bmatrix} r_Q(n+\hat{L}) & \cdots & r_Q(n) & \cdots & r_Q(n-\hat{L}) \\ r_Q(n+1+\hat{L}) & \cdots & r_Q(n+1) & \cdots & r_Q(n+1-\hat{L}) \\ \vdots & \vdots & \vdots & \vdots & \vdots \\ r_Q(n+P-K-1+\hat{L}) & \cdots & r_Q(n+P-K-1) & \cdots & r_Q(n+P-K-1-\hat{L}) \end{bmatrix} \; ;$$

la formation d'échantillons (P - K + (L - 1) / 2) à partir d'un échantillon (n + K - (L - 1) / 2) des données Q dans la matrice $\mathbf{R}_{2,Q}$, dans laquelle :

$$\mathbf{R}_{2,Q} = \begin{bmatrix} r_Q(n+K+\hat{L}) & \cdots & r_Q(n+K), & \cdots & r_Q(n+K-\hat{L}) \\ r_Q(n+K+1+\hat{L}) & \cdots & r_Q(n+K+1), & \cdots & r_Q(n+K+1-\hat{L}) \\ \vdots & & \vdots & & \vdots \\ r_Q(n+P-1+\hat{L}) & \cdots & r_Q(n+P-1), & \cdots & r_Q(n+P-1-\hat{L}) \end{bmatrix} \; ;$$

la détermination d'une matrice u étant égale lorsqu'elle est multipliée par r, obtenu à partir de $\mathbf{r}_{1,I}$ et $\mathbf{r}_{2,I}$, par $\Lambda$ obtenu à partir de $\mathbf{r}_{1,I}$ et $\mathbf{r}_{2,I}$, $\mathbf{R}_{1,Q}$, et $\mathbf{R}_{2,Q}$, dans laquelle :

$$\mathbf{r}_I = \begin{bmatrix} \mathbf{r}_{2,I} \\ \mathbf{r}_{1,I} \end{bmatrix} \quad \text{and} \quad \Lambda = \begin{bmatrix} \mathbf{r}_{1,I} & \mathbf{0} & -\mathbf{R}_{1,Q} \\ \mathbf{0} & \mathbf{r}_{2,I} & \mathbf{R}_{2,Q} \end{bmatrix} \; ;$$

la détermination d'un coefficient ß de compensation de déséquilibre I/Q à partir des premier et deuxième éléments de la matrice u et une valeur ε de décalages de fréquence de porteuses, CFO, basée sur ^ß, dans laquelle ;

$$\hat{\beta} = \frac{u(2) - u(1)}{2\sin(2\pi\hat{\varepsilon}K/N + \theta)} \; ;$$

et

la détermination d'un vecteur x de coefficient de compensation de déséquilibre I/Q à partir d'éléments autres que les premier et deuxième éléments de la matrice u et la valeur ε du CFO basée sur ^X, dans laquelle :

$$\hat{\mathbf{x}} = \frac{1}{\sin(2\pi\hat{\varepsilon}K/N + \theta)} [u(3), \cdots, u(L+2)]^T \; .$$

**3.** Procédé de compensation de déséquilibre I/Q pour la réception d'un signal ayant un signal pilote, de démodulation du signal au niveau d'un démodulateur ayant une branche I et une branche Q, suivies de la compensation du signal, le procédé comprenant les étapes consistant à :

numériser le signal latéral sur la branche I du signal reçu de manière à créer des données I ;
numériser le signal latéral sur la branche Q du signal reçu de manière à créer des données Q ;
multiplier les données Q par le vecteur x déterminé selon le procédé de la revendication 2 ;
multiplier les données I par ß déterminé selon le procédé de la revendication 2 ;
ajouter les données obtenues en multipliant les données I par ß aux données Q multipliées par le vecteur x de manière à créer des données Qc ; et
déterminer un nombre complexe avec les données I utilisées comme partie réelle et les données Qc utilisées comme partie imaginaire.

**4.** Procédé de compensation du signal pour la réception d'un signal ayant un signal pilote, de démodulation du signal au niveau d'un démodulateur ayant une branche I et une branche Q, suivies de la compensation du signal, le procédé comprenant l'étape de compensation du nombre complexe déterminé à la revendication 3, sur la base de la valeur d'estimation de CFO par le procédé selon la revendication 1.

**5.** Procédé d'estimation de décalages de fréquence de porteuses, CFO, pour la réception d'un signal ayant un signal pilote, de démodulation du signal au niveau d'un démodulateur ayant une branche I et une branche Q, suivies de l'estimation d'un CFO du signal, le procédé comprenant les étapes consistant à :

numériser le signal latéral sur la branche I du signal pilote reçu de manière à créer des données I ; et
numériser le signal latéral sur la branche Q du signal pilote reçu de manière à créer des données Q ;
**caractérisé par** :

la formation d'échantillons (P - K) à partir d'un échantillon n des données I dans la matrice $\mathbf{r}_{1,Q}$, dans laquelle :

$$\mathbf{r}_{1,Q} = [r_Q(n), \cdots, r_Q(n + P - K - 1)]^T ;$$

la formation d'échantillons (P - K) à partir d'un échantillon (n + K) des données I dans la matrice $\mathbf{r}_{2,Q}$, dans laquelle :

$$\mathbf{r}_{2,Q} = [r_Q(n + K), \quad \cdots \quad r_Q(n + P - 1)]^T ;$$

la formation d'échantillons (P - K + (L - 1) / 2) à partir d'un échantillon (n - (L - 1) /2) des données Q dans la matrice $\mathbf{R}_{1,I}$, dans laquelle :

$$\mathbf{R}_{1,I} = \begin{bmatrix} r_I(n + \hat{L}) & \cdots & r_I(n) & \cdots & r_I(n - \hat{L}) \\ r_I(n + 1 + \hat{L}) & \cdots & r_I(n + 1) & \cdots & r_I(n + 1 - \hat{L}) \\ \vdots & \vdots & \vdots & \vdots & \vdots \\ r_I(n + P - K - 1 + \hat{L}) & \cdots & r_I(n + P - K - 1) & \cdots & r_I(n + P - K - 1 - \hat{L}) \end{bmatrix} ;$$

la formation d'échantillons (P - K + (L-1) /2) à partir d'un échantillon (n + K - L (L - 1) /2) des données Q dans la matrice $\mathbf{R}_{2,I}$, dans laquelle :

$$\mathbf{R}_{2,I} = \begin{bmatrix} r_I(n+K+\hat{L}) & \cdots & r_I(n+K), & \cdots & r_I(n+K-\hat{L}) \\ r_I(n+K+1+\hat{L}) & \cdots & r_I(n+K+1), & \cdots & r_I(n+K+1-\hat{L}) \\ \vdots & & \vdots & & \vdots \\ r_I(n+P-1+\hat{L}) & \cdots & r_I(n+P-1), & \cdots & r_I(n+P-1-\hat{L}) \end{bmatrix};$$

la détermination d'une matrice u étant égale lorsqu'elle est multipliée par $r_{\mathbf{Q}}$, obtenu à partir de $\mathbf{r}_{1,Q}$ et de $\mathbf{r}_{2,Q}$, par $\Lambda$ obtenu à partir de $\mathbf{r}_{1,Q}$, $\mathbf{r}_{2,Q}$, $\mathbf{R}1,I$, et $\mathbf{R}_{2,I}$, dans laquelle :

$$\mathbf{r}_Q = \begin{bmatrix} \mathbf{r}_{2,Q} \\ \mathbf{r}_{1,Q} \end{bmatrix} \quad \text{and} \quad \Lambda = \begin{bmatrix} \mathbf{r}_{1,Q} & 0 & \mathbf{R}_{1,I} \\ 0 & \mathbf{r}_{2,Q} & -\mathbf{R}_{2,I} \end{bmatrix};$$

and = et
et
la détermination d'une valeur d'estimation ε de CFO à partir des premier et deuxième éléments de la matrice u sur la base de $^\wedge$ε, dans laquelle :

$$\hat{\varepsilon} = \frac{N}{2\pi K}\left\{ \arccos\left(\frac{u(1)+u(2)}{2}\right) - \theta \right\}.$$

6. Procédé de calcul du coefficient de compensation de déséquilibre I/Q pour la réception d'un signal ayant un signal pilote, de démodulation du signal au niveau d'un démodulateur ayant une branche I et une branche Q, suivies du calcul d'un coefficient de compensation pour compenser le déséquilibre I/Q du signal, le procédé comprenant les étapes consistant à :

numériser le signal latéral sur la branche I du signal pilote reçu de manière à créer des données I ; et
numériser le signal latéral sur la branche Q du signal pilote de manière à créer des données Q ;
**caractérisé par** ;
la formation d'échantillons (P - K) à partir d'un échantillon n des données I dans la matrice $\mathbf{r}_{1,Q}$, dans laquelle :

$$\mathbf{r}_{1,Q} = [r_Q(n), \cdots, r_Q(n+P-K-1)]^T;$$

la formation d'échantillons (P - K) à partir d'un échantillon (n + K) des données I dans la matrice $\mathbf{r}_{2,Q}$, dans laquelle :

$$\mathbf{r}_{2,Q} = [r_Q(n+K), \quad \cdots \quad r_Q(n+P-1)]^T;$$

la formation d'échantillons (P - K + (L - 1) /2) à partir d'un échantillon (n - (L - 1) /2) des donnés Q dans la matrice $\mathbf{R}_{1,I}$, dans laquelle :

$$\mathbf{R}_{1,I} = \begin{bmatrix} r_I(n+\hat{L}) & \cdots & r_I(n) & \cdots & r_I(n-\hat{L}) \\ r_I(n+1+\hat{L}) & \cdots & r_I(n+1) & \cdots & r_I(n+1-\hat{L}) \\ \vdots & \vdots & \vdots & \vdots & \vdots \\ r_I(n+P-K-1+\hat{L}) & \cdots & r_I(n+P-K-1) & \cdots & r_I(n+P-K-1-\hat{L}) \end{bmatrix};$$

la formation d'échantillons (P - K + (L-1) /2) à partir d'un échantillon (n + K - (L - 1) /2) des données Q dans la matrice $\mathbf{R}_{2,I}$, dans laquelle :

$$\mathbf{R}_{2,I} = \begin{bmatrix} r_I(n+K+\hat{L}) & \cdots & r_I(n+K), & \cdots & r_I(n+K-\hat{L}) \\ r_I(n+K+1+\hat{L}) & \cdots & r_I(n+K+1), & \cdots & r_I(n+K+1-\hat{L}) \\ \vdots & & \vdots & & \vdots \\ r_I(n+P-1+\hat{L}) & \cdots & r_I(n+P-1), & \cdots & r_I(n+P-1-\hat{L}) \end{bmatrix};$$

la détermination d'une matrice u étant égale lorsqu'elle est multipliée par $\mathbf{r}_Q$ obtenu à partir de $\mathbf{r}_{1,Q}$ et de $\mathbf{r}_{2,Q}$, par $\Lambda$ obtenu à partir de $\mathbf{r}_{1,Q}$, $\mathbf{r}_2$, $\mathbf{R}_{1,I}$, et $\mathbf{R}_{2,I}$, dans laquelle :

$$\mathbf{r}_Q = \begin{bmatrix} \mathbf{r}_{2,Q} \\ \mathbf{r}_{1,Q} \end{bmatrix} \quad \text{and} \quad \Lambda = \begin{bmatrix} \mathbf{r}_{1,Q} & 0 & \mathbf{R}_{1,I} \\ 0 & \mathbf{r}_{2,Q} & -\mathbf{R}_{2,I} \end{bmatrix};$$

and = et

la détermination d'un coefficient ß de compensation de déséquilibre I/Q à partir des premier et deuxième éléments de la matrice u et une valeur ε de CFO basée sur ^ß, dans laquelle :

$$\hat{\beta} = \frac{u(2) - u(1)}{2\sin(2\pi\hat{\varepsilon}K/N + \theta)};$$

la détermination d'un vecteur x du coefficient de compensation de déséquilibre I/Q à partir d'éléments autres que les premier et deuxième éléments de la matrice u et la valeur ^ε de CFU basée sur ^X, dans laquelle :

$$\hat{\mathbf{x}} = \frac{1}{\sin(2\pi\hat{\varepsilon}K/N + \theta)}[u(3), \cdots, u(L+2)]^T.$$

7. Procédé de compensation de déséquilibre I/Q pour la réception d'un signal ayant un signal pilote, de démodulation du signal au niveau d'un démodulateur ayant une branche I et une branche Q, suivies de la compensation du signal, le procédé comprenant les étapes consistant à :

numériser le signal latéral sur la branche I du signal reçu de manière à créer des données I ;
numériser le signal latéral sur la branche Q du signal reçu de manière à créer des données Q ;
multiplier les données I par le vecteur x déterminé selon le procédé de la revendication 6 ;
multiplier les données Q par ß déterminé selon le procédé de la revendication 6 ;

ajouter des données obtenues par la multiplication des données Q par ß aux données I multipliées par le vecteur x de manière à créer des données Ic ; et

déterminer un nombre complexe avec les données Q utilisées comme partie réelle et les données Qc utilisées comme partie imaginaire.

**8.** Procédé de compensation du signal pour la réception d'un signal ayant un signal pilote, de démodulation du signal au niveau d'un démodulateur ayant une branche I et une branche Q, suivies de la compensation du signal, le procédé comprenant l'étape de compensation du nombre complexe déterminé dans la revendication 7, sur la base de la valeur d'estimation de CFO déterminée par le procédé selon la revendication 5.

**9.** Procédé de détermination du signe de décalages de fréquence de porteuses, CFO, pour la réception d'un signal ayant un signal pilote, de démodulation du signal au niveau d'un démodulateur ayant une branche I et une branche Q, suivies de l'estimation d'un CFO du signal, le procédé comprenant les étapes consistant à :

numériser le signal latéral sur la branche I du signal pilote reçu de manière à créer des données I ; et
numériser le signal latéral sur la branche Q du signal pilote reçu de manière à créer des données O ;
**caractérisé par** :

la création d'une matrice R avec une première rangée et une deuxième rangée, la première rangée ayant des éléments (P - K) de données complexes avec des échantillons (P - K) provenant d'un échantillon n des données I utilisées comme partie réelle et des échantillons (P - K) provenant d'un échantillon n des données Q utilisées comme partie imaginaire, la deuxième rangée ayant des éléments de données complexes avec des échantillons (P - K) provenant d'un échantillon (n + K) des données I utilisées comme partie réelle et d'échantillons (P - K) provenant d'un échantillon (n + K) des données Q utilisées comme partie imaginaire, dans laquelle :

$$\mathbf{R} = \begin{bmatrix} r(n) & \cdots & r(n+P-K-1) \\ r(n+K) & \cdots & r(n+P-1) \end{bmatrix};$$

la création d'une matrice $\mathbf{E}_2(\varepsilon)$ basée sur une valeur absolue d'une valeur $\varepsilon$ d'estimation de CFO dont le signe doit être déterminé, dans laquelle :

$$\mathbf{E}_2(\varepsilon) = \begin{bmatrix} e^{-j\frac{2\pi\varepsilon K}{N}} & -1 \\ -e^{j\frac{2\pi\varepsilon K}{N}} & 1 \end{bmatrix};$$

la multiplication de R par $\mathbf{E}_2(\varepsilon)$ ; et
la comparaison d'une norme d'une première rangée de la matrice résultante à une norme d'une deuxième rangée afin de déterminer que le signe de $\varepsilon$ est positif lorsque la norme de la première rangée est supérieure à la norme de la deuxième rangée.

**10.** Procédé de calcul du coefficient de compensation de déséquilibre I/Q pour la démodulation d'un signal au niveau d'un démodulateur ayant une branche I et une branche Q, le signal contenant un signal pilote avec une courte TS (série de formation) et une longue TS et avec aucune différence de phase entre des symboles adjacents, et pour le calcul d'un coefficient de compensation pour compenser un déséquilibre I/Q du signal, le procédé étant **caractérisé par le fait qu'**il comprend les étapes consistant à :

sélectionner une sous-porteuse prédéterminée à partir de la courte TS et de la longue TS respective de manière à créer une matrice $\mathbf{W}_t$, dans laquelle :

$$\mathbf{W}_t = [\mathbf{f}_{64}^4, \mathbf{f}_{64}^8, \cdots, \mathbf{f}_{64}^{24}, \mathbf{f}_{64}^{40}, \mathbf{f}_{64}^{44}, \cdots, \mathbf{f}_{64}^{60}]\ ;$$

créer une matrice diagonale $\mathbf{S}_t$ à partir d'un élément de sous-porteuse de la courte TS, dans laquelle :

$$\mathbf{S}_t = \mathrm{diag}\{S_{t,1}, \cdots, S_{t,12}\}\ ;$$

créer une matrice diagonale $\mathbf{S}_T$ à partir d'un élément de sous-porteuse de la longue TS, dans laquelle :

$$\mathbf{S}_T = \mathrm{diag}\{S_{T,1}, \cdots, S_{T,12}\}\ ;$$

créer une matrice diagonale $\mathbf{R}(\varepsilon)$ à partir d'une valeur de décalages de fréquence de porteuses, CFO, dont la valeur absolue est inférieure à une valeur prédéterminée, dans laquelle :

$$\mathbf{\Gamma}(\varepsilon) \ = \ \mathrm{diag}\{1, e^{j\frac{2\pi\varepsilon}{N}}, \ldots, e^{j\frac{2\pi\varepsilon(N-1)}{N}}\}\ ;$$

créer $\mathbf{Z}_t$ à partir de $\mathbf{W}_t$, $\mathbf{S}_t$ et de $\mathbf{R}(\varepsilon)$, dans lequel :

$$\mathbf{Z}_t \ = \ e^{j2\pi\varepsilon\check{K}/N}\mathbf{S}_t^{-1}\mathbf{W}_t^{\mathcal{H}}\mathbf{\Gamma}^{\mathcal{H}}(\varepsilon)\ ;$$

créer $\mathbf{Z}_T$ à partir de $\mathbf{W}_t$, $\mathbf{S}_T$ et $\mathbf{R}(\varepsilon)$, dans lequel :

$$\mathbf{Z}_T \ = \ \mathbf{S}_T^{-1}\mathbf{W}_t^{\mathcal{H}}\mathbf{\Gamma}^{\mathcal{H}}(\varepsilon)\ ;$$

la formation d'échantillons (P - K) à partir d'un échantillon n des données I due la courte TS dans la matrice $\mathbf{r}_{t,I}$, dans laquelle :

$$\mathbf{r}_{t,I} = [r_I(\hat{n}), \cdots, r_I(\hat{n} + N - 1)]^T\ ;$$

la formation d'échantillons (P - K + (L -1) /2) dans la matrice $\mathbf{R}_{t,Q}$ à partir d'un échantillon (n - (L - 1) /2) des données Q de la courte TS, dans laquelle :

$$\mathbf{R}_{t,Q} = \begin{bmatrix} r_Q(\hat{n}+\hat{L}) & \cdots & r_Q(\hat{n}) & \cdots & \hat{r}_Q(\hat{n}-\hat{L}) \\ r_Q(\hat{n}+\hat{L}+1) & \cdots & r_Q(\hat{n}+1) & \cdots & r_Q(\hat{n}-\hat{L}+1) \\ \vdots & \vdots & \vdots & \vdots & \vdots \\ r_Q(\hat{n}+\hat{L}+N-1) & \cdots & r_Q(\hat{n}+N-1) & \cdots & r_Q(\hat{n}-\hat{L}+N-1) \end{bmatrix};$$

la formation d'échantillons (P - K) à partir d'un échantillon n des données I due la longue TS dans la matrice $\mathbf{r}_{T,I}$, dans laquelle :

$$\mathbf{r}_{T,I} = \begin{bmatrix} r_I(\hat{n}), & \cdots & r_I(\hat{n}+N-1) \end{bmatrix}^T;$$

la formation d'échantillons (P - K + (L - 1) /2 à partir d'un échantillon (n - (L - 1) /2) des données Q de la longue TS dans la matrice $\mathbf{R}_{T,Q}$, dans laquelle :

$$\mathbf{R}_{T,Q} = \begin{bmatrix} r_Q(\hat{n}+\hat{L}) & \cdots & r_Q(\hat{n}), & \cdots & r_Q(\hat{n}-\hat{L}) \\ r_Q(\hat{n}+\hat{L}+1) & \cdots & r_Q(\hat{n}+1), & \cdots & r_Q(\hat{n}-\hat{L}+1) \\ \vdots & & \vdots & & \vdots \\ r_Q(\hat{n}+\hat{L}+N-1) & \cdots & r_Q(\hat{n}+N-1), & \cdots & r_Q(\hat{n}-\hat{L}+N-1) \end{bmatrix};$$

la création de A à partir de $\mathbf{R}_{t,Q}$, $\mathbf{r}_{t,I}$, $\mathbf{R}_{T,Q}$, $\mathbf{r}_{T,I}$, $\mathbf{Z}_t$, et $\mathbf{Z}_T$, dans laquelle :

$$\mathbf{A} = \begin{bmatrix} \mathbf{Z}_{t,Q}\mathbf{R}_{t,Q} - \mathbf{Z}_{T,Q}\mathbf{R}_{T,Q} & \mathbf{Z}_{t,Q}\mathbf{r}_{t,I} - \mathbf{Z}_{T,Q}\mathbf{r}_{T,I} \\ \mathbf{Z}_{T,I}\mathbf{R}_{T,Q} - \mathbf{Z}_{t,I}\mathbf{R}_{t,Q} & \mathbf{Z}_{T,I}\mathbf{r}_{T,I} - \mathbf{Z}_{t,I}\mathbf{r}_{t,I} \end{bmatrix};$$

l'obtention de B à partir de $\mathbf{r}_{t,I}$, $\mathbf{r}_{T,I}$, $\mathbf{Z}_t$, et $\mathbf{Z}_T$, dans lequel :

$$\mathbf{B} = \begin{bmatrix} \mathbf{Z}_{t,I}\mathbf{r}_{t,I} - \mathbf{Z}_{T,I}\mathbf{r}_{T,I} \\ \mathbf{Z}_{t,Q}\mathbf{r}_{t,I} - \mathbf{Z}_{T,Q}\mathbf{r}_{T,I} \end{bmatrix};$$

et
la détermination d'un vecteur étant égal lorsqu'il est multiplié par A à B.

Fig. 1

Fig. 2

Fig. 3

Fig. 4

Fig. 5

Fig. 6

**Fig. 7**

**Fig. 8**

Fig. 9

Fig. 10

Fig. 11

Fig. 12

Fig. 13

Fig. 14

$$\text{GI} \quad p(k) \quad \text{GI} \quad p(k) \cdot e^{j\frac{\pi}{4}} \quad \text{GI} \quad p(k) \quad \cdots \quad \text{GI} \quad p(k) \cdot e^{j\frac{\pi}{4}}$$

$\hat{K}$

$K$

$M$ pilot symbols

Fig. 15

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Non-patent literature cited in the description

- **M. VALKAMA ; M. RENFORS ; V. KOIVUNEN.** Advanced methods for I/Q imbalance compensation in communication receivers. *IEEE Trans. Signal Processing,* October 2001, vol. 49 (10), 2335-2344
- **G. XING ; M. SHEN ; H. LIU.** Frequency Offset and I/Q Imbalance Compensation for Direct-Conversion Receivers. *IEEE Trans. Wireless Commun,* March 2005, vol. 4 (2), 673-680
- Introduction to Spectral Analysis. **P. SOTICA ; R. MOSES.** Introduction to Spectral Analysis. Prentice-Hall, 1997
- **J. K. CAVERS ; M. W. LIAO.** Adaptive compensation for imbalance and offset losses in direct conversion transceivers. *IEEE Trans. Veh. Technol.,* November 1993, vol. 42 (4), 581-585